(19)

Europäisches
Patentamt
European
Patent Office
Office européen
des brevets

(11) **EP 4 478 105 A1**

(12) **EUROPEAN PATENT APPLICATION**
published in accordance with Art. 153(4) EPC

(43) Date of publication:
**18.12.2024 Bulletin 2024/51**

(21) Application number: **23784238.0**

(22) Date of filing: **03.04.2023**

(51) International Patent Classification (IPC):
**G02B 13/00** $^{(2006.01)}$  **G02B 13/18** $^{(2006.01)}$
**G03B 30/00** $^{(2021.01)}$

(52) Cooperative Patent Classification (CPC):
**G02B 13/00; G02B 13/18; G03B 30/00**

(86) International application number:
**PCT/CN2023/085871**

(87) International publication number:
**WO 2023/193675 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.04.2022 CN 202210367876**

(71) Applicant: **Huawei Technologies Co., Ltd.
Shenzhen, Guangdong 518129 (CN)**

(72) Inventors:
• **WANG, Qi**
  **Shenzhen, Guangdong 518129 (CN)**
• **ZHANG, Kaiyuan**
  **Shenzhen, Guangdong 518129 (CN)**
• **YU, Xiaodan**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **LENS ASSEMBLY, CAMERA MODULE AND ELECTRONIC DEVICE**

(57)    Embodiments of this application provide a lens assembly, a camera module, and an electronic device. The lens assembly meets: $0.85 \leq 2 \times IMH/(TTL \times F\#) \leq 1.5$, and meets a design of an architecture with a large aperture, a large optical format, and a low total height, to improve imaging quality and facilitate implementing thinning of the camera module. In addition, a refractive index of a first lens and a refractive index of a second lens meet: $0.1 < nd2-nd1 < 0.15$, and an Abbe number of the first lens and an Abbe number of the second lens meet: $0 < vd1-vd2 < 40$, so as to achieve design objectives of a large aperture, a large optical format, and a smaller total track length while reducing costs of the lens assembly, and obtain the thinned lens assembly with low costs and good imaging quality, thereby significantly improving practicability and processability of the lens assembly.

FIG. 2

EP 4 478 105 A1

## Description

This application claims priority to Chinese Patent Application No. 202210367876.4, filed with the China National Intellectual Property Administration on April 08, 2022 and entitled "LENS ASSEMBLY, CAMERA MODULE, AND ELECTRONIC DEVICE", which is incorporated herein by reference in its entirety.

## TECHNICAL FIELD

This application relates to the field of electronic device technologies, and in particular, to a lens assembly, a camera module, and an electronic device.

## BACKGROUND

A camera module has become an indispensable functional component in an electronic product like a mobile phone, a tablet computer, a notebook computer, or a wearable device. With the development of lightening and thinning and multifunction of an electronic device, a camera module on the electronic device gradually develops toward miniaturization and thinning, and photographing effect and requirements of the camera module are increasingly aligned with those of a single-lens reflex camera. A size and functional effect of the camera module gradually become one of important features of the electronic device.

The camera module includes a lens assembly and an image sensor. The lens assembly is usually formed by a plurality of lenses sequentially arranged along an optical axis. Light is projected to the image sensor after passing through the lens assembly, to implement optical-to-electrical conversion, and is further used for imaging. Therefore, performance of the lens assembly directly determines imaging performance of the camera module. Currently, a camera of an electronic device gradually pursues designs of a large aperture, a large optical format, and a low total height. The large aperture facilitates functions such as night scene shooting, snapshot, video shooting, and bokeh of the camera. The large optical format helps improve brightness and resolution, so as to improve functionality of the camera. The low total height means that a total track length of the lens assembly is small, which helps implement thinning of a camera module.

However, an existing lens assembly with a large aperture, a large optical format, and a low total height has relatively high costs, affecting processability and practicability of the lens assembly.

## SUMMARY

This application provides a lens assembly, a camera module, and an electronic device, to resolve a problem that an existing lens assembly has high costs and poor imaging quality when an architecture with a large aperture, a large optical format, and a low total height is designed.

A first aspect of this application provides a lens assembly, including a plurality of lenses, where the plurality of lenses include at least a first lens, a second lens, a third lens, a fourth lens, a fifth lens, and a sixth lens that are sequentially arranged from an object side to an image side along an optical axis.

The lens assembly meets a conditional expression: $0.85 \leq 2 \times IMH/(TTL \times F\#) \leq 1.5$, where IMH is an image height half of the lens assembly, F# is an F-number of the lens assembly, and TTL is a total track length of the lens assembly. When the lens assembly has a small F-number and a large image height half, the lens assembly can have a small total track length. Design requirements of the lens assembly for a large aperture, a large optical format, and a small total track length are all met. In other words, a lens assembly of an architecture with a large aperture, a large optical format, and a low total height is provided. When imaging quality and effect of a camera module are improved, a thinning design of the camera module is facilitated.

In addition, a refractive index nd1 of the first lens and a refractive index nd2 of the second lens meet a conditional expression: $0.1 < nd2-nd1 < 0.15$, and an Abbe number vd1 of the first lens and an Abbe number vd2 of the second lens meet a conditional expression: $0 < vd1-vd2 < 40$. Under the parameter conditions, a lens with a low material cost can be implemented. For example, both the first lens and the second lens may be plastic lenses, to help reduce costs of the lens assembly, thereby reducing processing costs of the camera module. In some cases, to further reduce costs, both the first lens and the second lens may be lenses with relatively small Abbe numbers, and material costs of the lenses are lower. In this way, the lens assembly that meets the foregoing conditional expressions can be obtained by assembling lenses with relatively low costs and relatively small Abbe numbers, so as to achieve design objectives of a large aperture, a large optical format, and a smaller total track length, and obtain a thinned lens assembly with low costs and good imaging quality, thereby significantly improving practicability and processability of the lens assembly.

Further, to improve imaging quality, a focal length f3 of the third lens and a focal length f4 of the fourth lens meet a conditional expression: $|f3/f4| > 2.5$, so that focal powers of the third lens and the fourth lens can be properly allocated, thereby correcting an aberration, reducing an imaging aberration, and ensuring imaging quality.

In a possible implementation, a distance d45 from an image side surface of the fourth lens to an object side surface of the fifth lens in the optical axis direction meets a conditional expression: 0.03<d45/TTL<0.25. This helps improve processability of the fourth lens and the fifth lens, and also facilitates arrangement of the fourth lens and the fifth lens, and facilitates assembly and disposition of the lens assembly.

In a possible implementation, an Abbe number vd3 of the third lens and an Abbe number vd5 of the fifth lens meet a conditional expression: vd3/vd5<1. The third lens and the fifth lens may be lenses with relatively low Abbe numbers, or the third lens and the fifth lens may be plastic lenses, and the fifth lens may be a lens with a relatively large Abbe number in the plastic lenses. This helps improve imaging quality while reducing costs of the lens assembly.

In a possible implementation, the Abbe number vd2 of the second lens, vd3 of the third lens, and an Abbe number vd4 of the fourth lens meet a conditional expression: vd2+vd3+vd4>92, so that the second lens, the third lens, and the fourth lens may also be lenses with relatively small Abbe numbers, and the third lens and the fourth lens may also be plastic lenses. In this way, the costs of the lens assembly are further reduced while a large aperture, a large optical format, and a small total track length of the lens are implemented.

In a possible implementation, a refractive index nd4 of the fourth lens is less than 1.69, that is, the refractive index of the fourth lens is small. The fourth lens may be a lens with a relatively large Abbe number in the plastic lenses. This helps improve imaging quality while reducing the costs of the lens assembly.

In a possible implementation, at least the first lens, the second lens, the third lens, the fourth lens, and the fifth lens are plastic lenses, so that when design requirements of the lens assembly for a large aperture, a large optical format, and a low total height are met, the costs of the lens assembly can be significantly reduced, and processability and practicability of the lens assembly can be improved.

In a possible implementation, the first lens has a positive focal power, and the second lens has a negative focal power. In other words, the first lens has a function of converging light, and the second lens has a function of dispersing light. A combination of the first lens and the second lens can reduce a total track length, help reduce an aberration, and improve imaging quality.

In a possible implementation, at least a part that is of an image side surface of the first lens and that corresponds to the optical axis is a concave surface, so that a focal power of the first lens can be properly allocated, an aberration can be reduced, and image quality of a central field of view can be optimized, thereby improving imaging quality.

In a possible implementation, the third lens has a negative focal power, and the second lens and the third lens jointly implement a function of correcting an aberration. This helps reduce processing difficulty of the second lens and facilitates implementation.

The fourth lens has a positive focal power, and is configured to correct an aberration introduced by a front part of lenses (for example, the first lens, the second lens, and the third lens), to improve imaging quality.

In a possible implementation, at least a part that is of an object side surface of the third lens and that corresponds to the optical axis is a concave surface, and at least a part that is of an image side surface of the third lens and that corresponds to the optical axis is a convex surface, so that a focal power of the third lens can be properly allocated, an aberration can be reduced, and imaging quality can be improved.

In a possible implementation, at least a part that is of the image side surface of the fourth lens and that corresponds to the optical axis is a convex surface, so that a focal power of the fourth lens can be properly allocated, an aberration can be reduced, and imaging quality can be improved.

In a possible implementation, a curvature radius R2 of the image side surface of the first lens and a curvature radius R3 of an object side surface of the second lens meet a conditional expression: R2/R3>1.4. In this way, shapes and arrangement positions of the first lens and the second lens can be allocated more properly, to facilitate processing and assembly implementation of the first lens and the second lens.

In a possible implementation, the focal length f4 of the fourth lens and a total focal length f of the lens assembly meet a conditional expression: $0 \leq f4/f \leq 10$, and a focal power of the fourth lens is properly allocated, to reduce an aberration and further improve imaging quality.

In a possible implementation, a quantity N of the lenses meets a conditional expression: $6 \leq N \leq 10$. This helps improve a design freedom of the lens assembly while ensuring that the lens assembly has a low total track length, so as to implement a design of both a large aperture and a large optical format.

In a possible implementation, a focal length fi of each lens and the total focal length f of the lens assembly meet a conditional expression: $\Sigma_{i=1...N} |f/fi|>3$, where fi is a focal length of an $i^{th}$ lens, and i=1...N. In this way, focal powers of the N lenses can be properly allocated, to correct an aberration, thereby improving imaging quality.

In a possible implementation, the plurality of lenses further include a seventh lens, the seventh lens is located on a side that is of the sixth lens and that faces the image side, and the seventh lens has a negative focal power. In other words, the seventh lens has a function of dispersing light, and can further correct an aberration, to help reduce the aberration and improve imaging quality.

In a possible implementation, at least a part that is of an object side surface of the seventh lens and that corresponds to the optical axis is a concave surface, and at least a part that is of an image side surface of the seventh lens and that corresponds to the optical axis is a concave surface, so that a focal power of the seventh lens can be properly allocated, to reduce an aberration and optimize image quality of a central field of view, thereby improving imaging quality.

In a possible implementation, a curvature radius R13 of the object side surface of the seventh lens and the total focal length f of the lens assembly meet a conditional expression: $0 \leq |R13/f| \leq 1.8$. This helps improve processability of the seventh lens, also facilitates arrangement of the seventh lens, and facilitates assembly and disposition of the lens assembly.

In a possible implementation, a focal length f1 of the first lens, a focal length f6 of the sixth lens, and a focal length f7 of the seventh lens meet a conditional expression: $f1/(f6+f7)>1.4$. In this way, focal powers can be properly allocated, an aberration can be corrected, and the aberration can be reduced, so that imaging quality is further improved.

A second aspect of this application provides a camera module, including at least an image sensor and the lens assembly in any one of the foregoing implementations, where the image sensor is located on a side that is of the lens assembly and that faces the image side. The lens assembly is included. The lens assembly is of an architecture with a large aperture, a large optical format, and a low total height, and has low costs, so that photographing performance of the camera module can be significantly improved, imaging quality can be improved, and overall costs of the camera module can be reduced. In addition, this helps implement thinning of the camera module, so that the camera module is an ultra-thin camera with low costs and good imaging quality.

A third aspect of this application provides an electronic device, including at least a housing and the foregoing camera module, where the camera module is disposed on the housing. The camera module is included, and the camera module has low costs, good imaging quality, and ultra-thin performance. This helps reduce costs of the electronic device, improve photographing performance of the electronic device, and facilitates a thinning design of the electronic device.

## BRIEF DESCRIPTION OF DRAWINGS

FIG. 1 is a schematic diagram of a structure of an electronic device according to an embodiment of this application;
FIG. 2 is a schematic diagram of a structure of a camera module according to an embodiment of this application;
FIG. 3 is a schematic diagram of a simulation structure of a camera module according to Embodiment 1 of this application;
FIG. 4 is an axial chromatic aberration curve diagram of a lens assembly according to Embodiment 1 of this application;
FIG. 5 is a diagram of astigmatic and field curves of a lens assembly according to Embodiment 1 of this application;
FIG. 6 is a distortion curve diagram of a lens assembly according to Embodiment 1 of this application;
FIG. 7 is a schematic diagram of a simulation structure of a camera module according to Embodiment 2 of this application;
FIG. 8 is an axial chromatic aberration curve diagram of a lens assembly according to Embodiment 2 of this application;
FIG. 9 is a diagram of astigmatic and field curves of a lens assembly according to Embodiment 2 of this application;
FIG. 10 is a distortion curve diagram of a lens assembly according to Embodiment 2 of this application;
FIG. 11 is a schematic diagram of a simulation structure of a camera module according to Embodiment 3 of this application;
FIG. 12 is an axial chromatic aberration curve diagram of a lens assembly according to Embodiment 3 of this application;
FIG. 13 is a diagram of astigmatic and field curves of a lens assembly according to Embodiment 3 of this application;
FIG. 14 is a distortion curve diagram of a lens assembly according to Embodiment 3 of this application;
FIG. 15 is a schematic diagram of a simulation structure of a camera module according to Embodiment 4 of this application;
FIG. 16 is an axial chromatic aberration curve diagram of a lens assembly according to Embodiment 4 of this application;
FIG. 17 is a diagram of astigmatic and field curves of a lens assembly according to Embodiment 4 of this application;
FIG. 18 is a distortion curve diagram of a lens assembly according to Embodiment 4 of this application;
FIG. 19 is a schematic diagram of a simulation structure of a camera module according to Embodiment 5 of this application;
FIG. 20 is an axial chromatic aberration curve diagram of a lens assembly according to Embodiment 5 of this application;
FIG. 21 is a diagram of astigmatic and field curves of a lens assembly according to Embodiment 5 of this application;
FIG. 22 is a distortion curve diagram of a lens assembly according to Embodiment 5 of this application;
FIG. 23 is a schematic diagram of a simulation structure of a camera module according to Embodiment 6 of this application;

FIG. 24 is an axial chromatic aberration curve diagram of a lens assembly according to Embodiment 6 of this application;

FIG. 25 is a diagram of astigmatic and field curves of a lens assembly according to Embodiment 6 of this application;

FIG. 26 is a distortion curve diagram of a lens assembly according to Embodiment 6 of this application;

FIG. 27 is a schematic diagram of a simulation structure of a camera module according to Embodiment 7 of this application;

FIG. 28 is an axial chromatic aberration curve diagram of a lens assembly according to Embodiment 7 of this application;

FIG. 29 is a diagram of astigmatic and field curves of a lens assembly according to Embodiment 7 of this application; and

FIG. 30 is a distortion curve diagram of a lens assembly according to Embodiment 7 of this application.

Descriptions of reference numerals:

100-electronic device; 10-camera module; 11-lens assembly;
111-first lens; 112-second lens; 113-third lens;
114-fourth lens; 115-fifth lens; 116-sixth lens;
117-seventh lens; 118-aperture stop; 12-light filter;
13-imaging plane; 20-housing.

## DESCRIPTION OF EMBODIMENTS

Terms used in embodiments of this application are merely used to explain specific embodiments of this application, but are not intended to limit this application.

For ease of understanding, related technical terms in embodiments of this application are first explained and described.

A focal length, also referred to as a focal length, is a metric for measuring light convergence or dispersion in an optical system, and means a vertical distance from an optical center of a lens or a lens group to a focal plane when a clear image of an infinitely far scene is formed on the focal plane by using the lens or the lens group. From a practical perspective, the focal length may be understood as a distance from a center of a lens (lens assembly) to an imaging plane.

An optical axis is light passing through a center of each lens of the lens assembly.

A field of view (Field of View, FOV for short) is an angle formed by using a lens as a vertex and by using two edges of a maximum range in which an image of a photographed object can pass through a lens. A size of the field of view determines a view range of the lens. A larger field of view indicates a larger view.

An aperture is an apparatus configured to control the amount of light that enters an electronic device through the lens. In the lens, a size of the aperture is usually represented by an F# value.

The F-number F# is a relative value (a reciprocal of a relative aperture) of the focal length of the lens divided by a light transmission diameter of the lens. A smaller value of the F-number F# indicates a larger amount of incident light in a same unit time and a smaller depth of field, and photographed background content blurs, to generate effect similar to that of a lens with a long focal length.

A focal power represents a refraction capability of a lens to an incident parallel beam.

A positive focal power indicates that a lens has a positive focal length, and has effect of converging light.

A negative focal power indicates that a lens has a negative focal length, and has effect of dispersing light.

An object side is a side on which a photographed object is located when the lens assembly is used as a boundary, and a surface that is of a lens and that faces the object side is an object side surface of the lens.

An image side is a side on which an image of the photographed object is located, and a surface that is of a lens and that faces the image side is an image side surface.

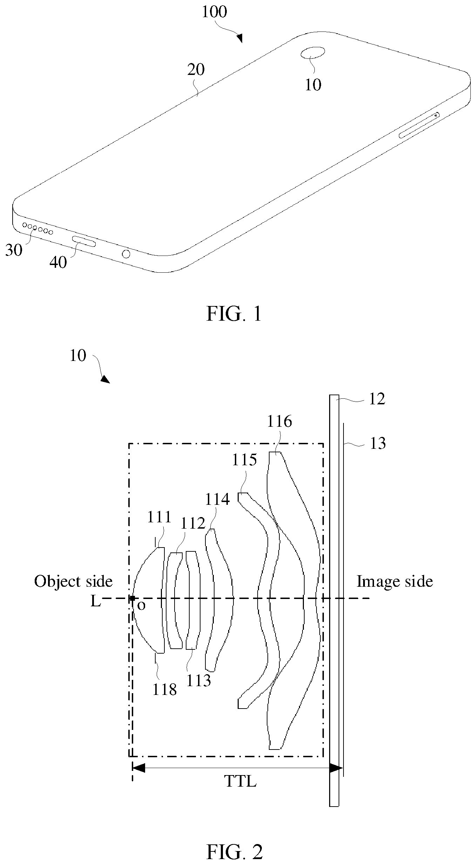

A total track length (Total Track Length, TTL for short) is a total length from a vertex of a first lens that is disposed close to the object side in the lens assembly to an imaging plane of the lens assembly, and is also referred to as a total optical length. In this application, the TTL may be a distance (refer to FIG. 2) from an object side surface (o) of the first lens to a photosensitive surface of an image sensor on optical axes of a plurality of lenses of the lens assembly.

An image height (Image Height; IH) is a full image height of an image formed by the lens assembly. An image height half (IMH) is a half of the image height.

A target surface is a photosensitive surface of the image sensor. A larger optical format indicates a larger amount of light sensed by the image sensor and a larger image height of imaging.

An Abbe number is also referred to as a dispersion coefficient, is a difference ratio between refractive indexes of an optical material at different wavelengths, and indicates a dispersion degree of the material.

A refractive index is a ratio of a speed of light in the air to a speed of light in an optical material. A higher refractive index of the optical material indicates a stronger refraction capability of incident light and a smaller thickness of a lens. Generally, a larger refractive index of a lens indicates a smaller Abbe number of the lens.

An axial chromatic aberration means that a beam parallel to an optical axis converges at different front and rear positions after passing through the lens, and this aberration is referred to as a position chromatic aberration or an axial chromatic aberration. This is because the lens assembly images light with different wavelengths at different positions, so that focal planes of images of light of different colors cannot overlap during final imaging, and compound color light disperses to form dispersion.

Distortion, also referred to as distortion, is a degree of distortion of an image formed by the lens assembly for the photographed object relative to the photographed object. A height of an intersection point between main light of different fields of view and a Gaussian image surface after the main light passes through the lens assembly is not equal to an ideal image height. A difference between the two is distortion.

An electronic device provided in embodiments of this application may include but is not limited to an electronic device having a camera module, like a mobile phone, a tablet computer, a notebook computer, an ultra-mobile personal computer (ultra-mobile personal computer, UMPC), a handheld computer, a walkie-talkie, a netbook, a POS terminal, a personal digital assistant (personal digital assistant, PDA), a wearable device, a virtual reality device, or an in-vehicle apparatus.

In embodiments of this application, an example in which the electronic device is a mobile phone is used. The mobile phone may be a bar-type mobile phone, or a foldable mobile phone. Specifically, the following uses an example in which the electronic device is a bar-type mobile phone for description.

FIG. 1 is a schematic diagram of a structure of an electronic device according to an embodiment of this application.

With reference to FIG. 1, an electronic device 100 may include a housing 20 and a camera module 10. The camera module 10 may be disposed on the housing 20, and the camera module 10 is configured to implement a photographing function.

The camera module 10 may be located on a front side (a side having a display screen) of the electronic device 100, and is configured to take a selfie or shoot another object. Alternatively, with reference to FIG. 1, the camera module 10 may be located on a back side (a side opposite to the display screen) of the electronic device 100, and is configured to shoot another object, or certainly may be configured to take a selfie.

The electronic device 100 may include one or more camera modules 10, to meet different photographing requirements.

The electronic device 100 may further include another mechanical part. For example, with continued reference to FIG. 1, the housing 20 of the electronic device 100 may be further provided with speaker holes 30, and the speaker holes 30 may be used for playing audio and the like of the electronic device 100. The housing 20 of electronic device 100 may further be provided with a data interface 40. The data interface 40 may be used for supplying power to the electronic device 100, or the data interface 40 may be used for connecting the electronic device 100 to a headset, an external multimedia device, or the like (for example, an external camera or an external projection device).

Certainly, in some other examples, the electronic device 100 may further include another mechanical part to complete a function of the electronic device 100, for example, a sensor, a processor, a circuit board, and a drive structure. This is not limited in embodiments of this application.

Generally, the camera module may include a lens assembly and an image sensor. Light may enter the camera module from the lens assembly. Specifically, light reflected by a photographed object may enter the lens assembly. After the light passes through the lens assembly to adjust and control an optical path, a light image is generated, and is irradiated to a photosensitive surface of the image sensor. The image sensor can implement an optical-to-electrical conversion function, and the image sensor receives the light image and converts the light image into an electrical signal for imaging display.

The camera module may further include an image processor, a memory, and the like. The image sensor may transmit the electrical signal to the image processor and the memory for processing, and then an image of the photographed object is displayed by a display screen of the electronic device.

Optical performance of the lens assembly greatly affects imaging quality and effect of the camera module. For example, an F-number of the lens assembly affects functions such as night scene shooting, video shooting, bokeh, and snapshot. In other words, a camera module using a large aperture has better imaging quality and imaging effect in scenarios such as night scene shooting, video shooting, bokeh, and snapshot.

An optical format of the lens assembly is also one of important factors that affect imaging quality. A camera module with a large optical format helps improve imaging brightness and resolution of the camera module, to obtain better imaging quality.

With the development of lightening and thinning of the electronic device, a thinning design requirement of the camera module is also increasing, and a low total height design of the lens assembly is also particularly important. The low total height means that the lens assembly has a small total track length, so that space occupied by the lens assembly is reduced, thereby facilitating thinning of the camera module and further meeting a thinning design requirement of the electronic device. Therefore, a lens assembly with a low total height, a large aperture, and a large optical format has become one of inevitable trends of development. However, an existing lens assembly with a low total height, a large optical format, and a large aperture has high costs, affecting processability and practicability of the lens assembly.

Based on this, an embodiment of this application provides a lens assembly, which has a small total track length while implementing high imaging quality of a large aperture and a large optical format, and meets design requirements for a low total height, a large optical format, and a large aperture of the lens assembly, and further has low costs.

With reference to the accompanying drawings, the following describes in detail a lens assembly and a camera module including the lens assembly provided in embodiments of this application.

FIG. 2 is a schematic diagram of a structure of a camera module according to an embodiment of this application.

With reference to FIG. 2, a camera module 10 provided in this embodiment of this application includes a lens assembly 11 and an image sensor 13. The image sensor 13 is located on a side that is of the lens assembly 11 and that faces an image side. A photosensitive surface (which may also be referred to as an imaging plane) of the image sensor 13 may face the lens assembly 11. Light entering the camera module 10 from the lens assembly 11 may irradiate the photosensitive surface of the image sensor 13 after passing through the lens assembly 11, to implement imaging of the light.

The image sensor 13 may be a charge-coupled device (Charge-coupled Device, CCD), or may be a complementary metal oxide semiconductor (Complementary Metal Oxide Semiconductor, CMOS). Alternatively, the image sensor 13 may be another device that can implement an optical-to-electrical conversion function.

Still refer to FIG. 2. The camera module 10 may further include a light filter 12. The light filter 12 may be located between the lens assembly 11 and the image sensor 13, and light passing through the lens assembly 11 passes through the light filter 12 and then irradiates the photosensitive surface of the image sensor 13. The light filter 12 has a light filtering function, and can enable light within a specific wavelength range to pass through, so as to filter out stray light that is not conducive to imaging, and help improve imaging quality. In the following accompanying drawings, the lens assembly is mainly marked with reference numerals, and the image sensor and the light filter are used for position illustration.

The camera module 10 may further include a lens barrel (not shown in the figure), and the lens assembly 11, the light filter 12, the image sensor 13, and the like may be disposed in the lens barrel.

The lens assembly 11 may include a plurality of lenses, and each lens may have a focal power. A dashed line L in FIG. 2 is used as an optical axis of the lens assembly 11. A plurality of lenses may be sequentially arranged along the optical axis, and the optical axis of the lens assembly 11 may overlap a central axis of the lens barrel.

Specifically, the lens assembly 11 includes at least a first lens 111, a second lens 112, a third lens 113, a fourth lens 114, a fifth lens 115, and a sixth lens 116 that are sequentially arranged from an object side to the image side along the optical axis direction, that is, the lens assembly 11 includes at least the foregoing six lenses.

It should be understood that the lens assembly 11 may include only the foregoing six lenses, or the lens assembly 11 may include another quantity of lenses in addition to the foregoing six lenses. In other words, the quantity of lenses may be N. From the object side to the image side, the lens assembly 11 may include the first lens, the second lens, the third lens, ..., and an $N^{th}$ lens that are sequentially arranged along the optical axis direction, where $N \geq 6$.

A value of the quantity N of the lens assembly 11 may be: $6 \leq N \leq 10$. This ensures that the lens assembly 11 has a low total track length, and helps improve a design freedom of the lens assembly 11, so as to implement a design with both a large aperture and a large optical format.

For the N lenses included in the lens assembly 11, a lens located at an end that is of the lens assembly 11 and that is close to the object side is the first lens, a lens adjacent to the first lens from the object side to the image side is the second lens, and by analogy, a lens located at an end that is of the lens assembly 11 and that is close to the image side is the $N^{th}$ lens. For example, as shown in FIG. 2, if the lens assembly 11 includes six lenses, N=6, the first lens 111 is disposed close to the object side, and the sixth lens 116 is disposed close to the image side.

Still refer to FIG. 2. The lens assembly 11 may further include an aperture stop 118. The aperture stop 118 may be located on a side that is of the first lens 111 and that is close to the object side. Light entering the lens assembly 11 may first pass through the aperture stop 118, and then sequentially pass through the six lenses. The aperture stop 118 can limit the light entering the lens assembly, to adjust intensity of the light, and help improve imaging quality.

With reference to FIG. 2, the following describes the lens assembly 11 by using an example in which the lens assembly 11 includes the first lens 111, the second lens 112, the third lens 113, the fourth lens 114, the fifth lens 115, and the sixth lens 116.

In this embodiment of this application, the lens assembly 11 may meet a conditional expression: $0.85 \leq 2 \times IMH/(TTL \times F\#) \leq 1.5$, where IMH is an image height half of the lens assembly 11, F# is an F-number of the lens assembly 11, and TTL is a total track length of the lens assembly 11. When the lens assembly 11 has a small F-number and a large image height half, the lens assembly 11 can have a small total track length. Design requirements of the lens assembly for a large aperture, a large optical format, and a small total track length are all met. In other words, a lens assembly 11 of an architecture with a large aperture, a large optical format, and a low total height can be provided. When imaging quality and effect of the camera module 10 are improved, a thinning design of the camera module 10 is facilitated.

In addition, in the lens assembly 11, a refractive index nd1 of the first lens 111 and a refractive index nd2 of the second lens 112 may meet a conditional expression: 0.1<nd2-nd1<0.15, and an Abbe number vd1 of the first lens 111 and an Abbe number vd2 of the second lens 112 may meet a conditional expression: 0<vd1-vd2<40, that is, the refractive index of the second lens 112 is relatively high with respect to that of the first lens 111. The second lens 112 may be a lens with a small Abbe number (for example, less than 30), for example, a plastic lens. A difference between the Abbe number of the first lens 111 and the Abbe number of the second lens 112 is small, and the first lens 111 may also be a lens with a relatively small Abbe number, for example, a plastic lens.

In other words, the Abbe number of the first lens 111 is greater than the Abbe number of the second lens 112, and both the first lens 111 and the second lens 112 may be lenses with relatively small Abbe numbers, and material costs of the lenses are relatively low. For example, both the first lens 111 and the second lens 112 may be plastic lenses. This helps reduce costs of the lens assembly 11, and further reduces processing costs of the camera module 10. In other words, the lens assembly 11 that meets the foregoing conditional expressions can be obtained by assembling lenses with relatively low costs and relatively small Abbe numbers, so as to achieve design objectives of a large aperture, a large optical format, and a smaller total track length, and obtain the thinned lens assembly 11 with low costs and good imaging quality, thereby significantly improving practicability and processability of the lens assembly 11.

In addition, both the first lens 111 and the second lens 112 have relatively small Abbe numbers, and the first lens 111 and the second lens 112 may be thin lenses with good performance. This helps further reduce thicknesses of the first lens 111 and the second lens 112 while taking performance of both a large aperture and a large optical format into consideration, to further reduce a total track length of the lens assembly 11, and further help implement thinning of the camera module 10 to obtain an ultra-thin camera module 10 with low costs and good imaging quality.

A focal length f3 of the third lens 113 and a focal length f4 of the fourth lens 114 may meet a conditional expression: |f3/f4|>2.5. Specifically, a focal power is a reciprocal of a focal length. When the focal length f3 of the third lens 113 and the focal length f4 of the fourth lens 114 meet the foregoing conditional expressions, focal powers of the third lens 113 and the fourth lens 114 can be properly allocated, an aberration is corrected, and an imaging aberration is reduced, so that imaging quality is ensured.

The camera module 10 may be used as a main camera of the electronic device 100, and can meet a performance requirement of the main camera. Certainly, in some other examples, the camera module 10 may alternatively be used as a secondary camera of the electronic device 100.

In the N lenses of the lens assembly 11, the first lens 111 may have a positive focal power. In other words, the first lens 111 has a function of converging light. The second lens 112 may have a negative focal power, and the second lens 112 has a function of dispersing light. A combination of the first lens 111 and the second lens 112 can correct an aberration. This helps reduce the aberration, and improve imaging quality while reducing a total track length.

At least a part that is of an image side surface of the first lens 111 and that corresponds to the optical axis is a concave surface, so that focal power of the first lens 111 can be properly allocated, an aberration can be reduced, and image quality of a central field of view can be optimized, thereby improving imaging quality.

A curvature radius R2 of the image side surface of the first lens 111 and a curvature radius R3 of an object side surface of the second lens 112 may meet a conditional expression: R2/R3>1.4. In this way, shapes and arrangement positions of the first lens 111 and the second lens 112 can be allocated more properly, to facilitate processing and assembly implementation of the first lens 111 and the second lens 112.

The third lens 113 may have a negative focal power, and the third lens 113 has a function of further dispersing light. To be specific, the second lens 112 and the third lens 113 jointly implement a function of correcting an aberration. This helps reduce processing difficulty of the second lens 112 and facilitates implementation.

The fourth lens 114 may have a positive focal power, and is configured to correct an aberration introduced by the first lens, the second lens, the third lens, and the like with low Abbe numbers, to improve imaging quality.

At least a part that is of an object side surface of the third lens 113 and that corresponds to the optical axis is a concave surface, and at least a part that is of an image side surface of the third lens 113 and that corresponds to the optical axis is a convex surface, so that a focal power of the third lens 113 can be properly allocated, an aberration can be reduced, and imaging quality can be improved.

At least a part that is of the image side surface of the fourth lens 114 and that corresponds to the optical axis is a convex surface, so that a focal power of the fourth lens 114 can be properly allocated, an aberration can be reduced, and imaging quality can be improved.

The Abbe number vd2 of the second lens 112, the Abbe number vd3 of the third lens 113, and an Abbe number vd4 of the fourth lens 114 may meet a conditional expression: vd2+vd3+vd4>92. The second lens 112, the third lens 113, and the fourth lens 114 may also be lenses with relatively small Abbe numbers, and the third lens 113 and the fourth lens 114 may also be plastic lenses, so that costs of the lens assembly 11 are further reduced while a large aperture, a large optical format, and a small total track length of the lens are implemented.

The Abbe number of the fourth lens 114 may be greater than those of the second lens 112 and the third lens 113, to ensure imaging effect and quality. The Abbe number of the second lens 112 may be close to that of the third lens 113.

A refractive index n4 of the fourth lens 114 may meet: n4<1.69, that is, the refractive index of the fourth lens 114 is small, so that the Abbe number of the fourth lens 114 is large. In other words, the fourth lens 114 may be a lens with a relatively large Abbe number in plastic lenses. This helps improve imaging quality while reducing costs of the lens assembly 11.

In the direction of the optical axis L, a distance between the image side surface of the fourth lens 114 and an object side surface of the fifth lens 115 is d45, and a value of d45 may be 0.03<d45/TTL<0.25. This helps improve processability of the fourth lens 114 and the fifth lens 115, and also facilitates arrangement of the fourth lens 114 and the fifth lens 115, and facilitates assembly and disposition of the lens assembly 11 (for example, facilitates assembly of the lens assembly 11 and disposition of the lens assembly 11 in the lens barrel).

The Abbe number vd3 of the third lens 113 and an Abbe number vd5 of the fifth lens 115 may meet a conditional expression: vd3/vd5<1, so that the third lens 113 and the fifth lens 115 may be lenses with relatively low Abbe numbers, and the third lens 113 and the fifth lens 115 may also be plastic lenses. The Abbe number of the fifth lens 115 is greater than that of the third lens 113, that is, the fifth lens 115 may be a lens with a relatively large Abbe number in the plastic lenses. This helps improve imaging quality while reducing costs of the lens assembly 11.

A total focal length of the lens assembly 11 is related to a focal length of each lens. For example, the total focal length of the lens assembly 11 may meet a conditional expression: $\Sigma_{i=1...N} |f/fi|>3$, where fi is a focal length of an $i^{th}$ lens, and i=1...N. For example, when the lens assembly 11 includes six lenses, the focal length of the lens assembly 11 meets: $\Sigma_{i=1...6} |f/fi|>3$, so that focal powers of the N lenses can be properly allocated, to correct an aberration and further improve imaging quality.

The focal length of the fourth lens 114 and the total focal length f of the lens assembly 11 may meet a conditional expression: 0≤f4/f≤10, so that a focal power of the fourth lens 114 is properly allocated, to reduce an aberration and further improve imaging quality.

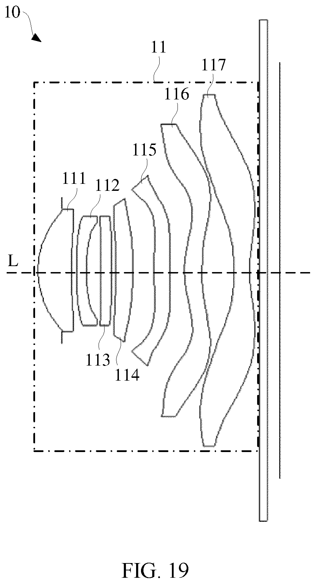

In this embodiment of this application, when N=7, that is, the lens assembly 11 includes seven lenses (with reference to FIG. 19), a seventh lens 117 may be located on a side that is of the sixth lens 116 and that faces the image side, that is, along the optical axis L, the lens assembly 11 includes the first lens 111, the second lens 112, the third lens 113, the fourth lens 114, the fifth lens 115, the sixth lens 116, and the seventh lens 117 that are sequentially arranged from the object side surface to the image side surface.

The seventh lens 117 may have a negative focal power, that is, the seventh lens 117 implements a function of dispersing light, and can further correct an aberration, thereby helping reduce the aberration and improve imaging quality.

At least a part that is of an object side surface of the seventh lens 117 and that corresponds to the optical axis may be a concave surface, and at least a part that is of an image side surface of the seventh lens 117 and that corresponds to the optical axis may also be a concave surface, so that a focal power of the seventh lens 117 can be properly allocated, to reduce an aberration and optimize image quality of a central field of view, thereby improving imaging quality.

A curvature radius R13 of the object side surface of the seventh lens 117 and the total focal length f of the lens assembly 11 may meet a conditional expression: 0≤|R13/f|≤1.8. This helps improve processability of the seventh lens 117, also facilitates arrangement of the seventh lens 117, and facilitates assembly and disposition of the lens assembly 11.

A focal length f1 of the first lens 111, a focal length f6 of the sixth lens 116, and a focal length f7 of the seventh lens 117 may meet a conditional expression: f1/(f6+f7)>1.4. In this way, focal powers can be properly allocated, an aberration can be corrected, and the aberration can be reduced, so that imaging quality is further improved.

The following describes a structure and performance of the lens assembly 11 provided in this application with reference to specific embodiments.

**Embodiment 1**

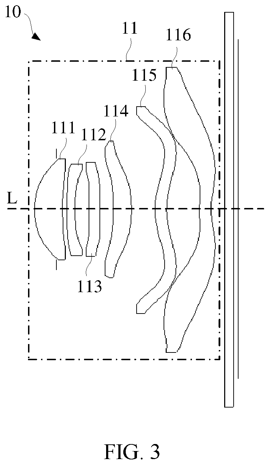

FIG. 3 is a schematic diagram of a simulation structure of a camera module according to Embodiment 1 of this application.

In this embodiment of this application, with reference to FIG. 3, the quantity N of the lenses included in the lens assembly 11 is 6. From the object side to the image side along the optical axis L, the first lens 111, the second lens 112, the third lens 113, the fourth lens 114, the fifth lens 115, and the sixth lens 116 are sequentially included. The first lens 111, the second lens 112, the third lens 113, the fourth lens 114, the fifth lens 115, and the sixth lens 116 are all plastic lenses.

The image height half IMH of the lens assembly 11, the total track length TTL of the lens assembly 11, and the F-number F# of the lens assembly 11 meet: 2×IMH/(TTL×F#)=0.98.

The first lens 111 has a positive focal power, at least the part that is of the image side surface of the first lens 111 and that corresponds to the optical axis is a concave surface, and the second lens 112 has a negative focal power.

The refractive index nd1 of the first lens 111 is 1.55, the refractive index nd2 of the second lens 112 is 1.68, and the refractive index nd1 of the first lens 111 and the refractive index nd2 of the second lens 112 meet: nd2-nd1=0.13.

The Abbe number vd1 of the first lens 111 is 56.14, the Abbe number vd2 of the second lens 112 is 19.25, and the Abbe number vd1 of the first lens 111 and the Abbe number vd2 of the second lens 112 meet: vd1-vd2=36.89.

The focal length f1 of the first lens 111 is 4.91 mm.

A focal length f2 of the second lens 112 is -12.59 mm.

The curvature radius R2 of the image side surface of the first lens 111 is 12.32 mm, the curvature radius R3 of the object side surface of the second lens 112 is 7.26 mm, and the curvature radius R2 of the image side surface of the first lens 111 and the curvature radius R3 of the object side surface of the second lens 112 meet: R2/R3=1.7.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius R5 of the object side surface of the third lens 113 is -7.99 mm.

The fourth lens 114 has a positive focal power, and at least the part that is of the image side surface of the fourth lens 114 and that corresponds to the optical axis is a convex surface.

The focal length f3 of the third lens 113 is -1118.68 mm, the focal length f4 of the fourth lens 114 is 15.36 mm, and the focal length f3 of the third lens 113 and the focal length f4 of the fourth lens 114 meet: |f3/f4|=72.81.

The total focal length f of the lens assembly 11 is 5.39, and the focal length f4 of the fourth lens 114 and the total focal length f of the lens assembly 11 meet: f4/f=2.85.

A refractive index nd4 of the fourth lens 114 is 1.55.

The Abbe number vd2 of the second lens 112 is 19.25, the Abbe number vd3 of the third lens 113 is 19.25, the Abbe number vd4 of the fourth lens 114 is 56.14, and the Abbe number vd2 of the second lens 112, the Abbe number vd3 of the third lens 113, and the Abbe number vd4 of the fourth lens 114 meet: vd2+vd3+vd4=94.63.

The distance d45 from the image side surface of the fourth lens 114 to the object side surface of the fifth lens 115 in the optical axis direction is 0.71, the total track length TTL of the lens assembly 11 is 6.2, and the distance d45 from the image side surface of the fourth lens 114 to the object side surface of the fifth lens 115 in the optical axis direction meets: d45/TTL=0.12.

The Abbe number vd3 of the third lens 113 is 19.25, the Abbe number vd5 of the fifth lens 115 is 20.35, and the Abbe number vd3 of the third lens 113 and the Abbe number vd5 of the fifth lens 115 meet: vd3/vd5=0.95.

At least a part that is of an image side surface of the sixth lens 116 and that corresponds to the optical axis is a concave surface, and the focal length f6 of the sixth lens 116 is -5.18 mm.

The focal length fi of each lens and the total focal length of the lens assembly 11 meet: $\Sigma|f/fi|=3.13$, and i=1...6.

**Table 1 below shows optical parameters of optical elements in a camera module according to Embodiment 1 of this application.**

|  | R |  | d |  | nd |  | vd |  |
|---|---|---|---|---|---|---|---|---|
| S1 | R0 | ∞ | d0 | -0.66 |  |  |  |  |
| L1 | R1 | 2.02 | d1 | 0.85 | nd1 | 1.546 | vd1 | 56.14 |
|  | R2 | 6.94 | d2 | 0.13 |  |  |  |  |
| L2 | R3 | 13.18 | d3 | 0.25 | nd2 | 1.678 | vd2 | 19.25 |
|  | R4 | 5.14 | d4 | 0.44 |  |  |  |  |
| L3 | R5 | 22.08 | d5 | 0.32 | nd3 | 1.678 | vd3 | 19.25 |
|  | R6 | 21.33 | d6 | 0.41 |  |  |  |  |
| L4 | R7 | -9.33 | d7 | 0.56 | nd4 | 1.546 | vd4 | 56.14 |
|  | R8 | -4.51 | d8 | 0.71 |  |  |  |  |
| L5 | R9 | 2.21 | d9 | 0.35 | nd5 | 1.667 | vd5 | 20.35 |
|  | R10 | 2.37 | d10 | 0.99 |  |  |  |  |
| L6 | R11 | 3.20 | d11 | 0.35 | nd6 | 1.546 | vd6 | 56.14 |
|  | R12 | 1.44 | d12 | 0.42 |  |  |  |  |
| IR | R13 | ∞ | d13 | 0.21 | ndg | 1.518 | vdg | 64.17 |
|  | R14 | ∞ | d14 | 0.18 |  |  |  |  |

L1 is the first lens 111, L2 is the second lens 112, L3 is the third lens 113, L4 is the fourth lens 114, L5 is the fifth lens 115, L6 is the sixth lens 116, S1 is the aperture stop 118, and IR is the light filter 12.

R is a curvature radius of an optical element (for example, a lens or a light filter) at a corresponding position of the optical axis. R0 is a curvature radius of the aperture stop 118, R1 and R2 are curvature radiuses of the first lens 111 on the object side surface and the image side surface respectively, R3 and R4 are curvature radiuses of the second lens 112 on the object side surface and the image side surface respectively, R5 and R6 are curvature radiuses of the third lens 113 on the object side surface and the image side surface respectively, R7 and R8 are curvature radiuses of the fourth lens 114 on the object side surface and the image side surface respectively, R9 and R10 are curvature radiuses of the fifth lens 115 on the object side surface and the image side surface respectively, R11 and R12 are curvature radiuses of the sixth lens 116 on the object side surface and the image side surface respectively, and R13 and R14 are curvature radiuses of the light filter 12 on the object side surface and the image side surface respectively.

d is a thickness of an optical element along the optical axis direction or a thickness of an air gap between optical elements. d0 is a distance from the aperture stop 118 to the object side surface of the first lens 111 along the optical axis direction, d1 is a thickness of the first lens 111 along the optical axis direction, d2 is a distance from the image side surface of the first lens 111 to the object side surface of the second lens 112 along the optical axis direction, d3 is a thickness of the second lens 112 along the optical axis direction, d4 is a distance from the image side surface of the second lens 112 to the object side surface of the third lens 113 along the optical axis direction, d5 is a thickness of the third lens 113 along the optical axis direction, d6 is a distance from the image side surface of the third lens 113 to the object side surface of the fourth lens 114 along the optical axis direction, d7 is a thickness of the fourth lens 114 along the optical axis direction, d8 is a distance from the image side surface of the fourth lens 114 to the object side surface of the fifth lens 115 along the optical axis direction, d9 is a thickness of the fifth lens 115 along the optical axis direction, d10 is a distance from the image side surface of the fifth lens 115 to the object side surface of the sixth lens 116 along the optical axis direction, d11 is a thickness of the sixth lens 116 along the optical axis direction, d12 is a distance from the image side surface of the sixth lens 116 to the object side surface of the light filter 12 along the optical axis direction, d13 is a thickness of the light filter along the optical axis direction, and d14 is a distance from an image side surface of the light filter 12 to the photosensitive surface of the image sensor 13 along the optical axis direction.

nd is a refractive index of a d-line irradiating each optical element, where the d-line may be green light with a wavelength of 550 nm. nd1 is a d-line refractive index of the first lens 111, nd2 is a d-line refractive index of the second lens 112, nd3 is a d-line refractive index of the third lens 113, nd4 is a d-line refractive index of the fourth lens 114, nd5 is a d-line refractive index of the fifth lens 115, nd6 is a d-line refractive index of the sixth lens 116, and ndg is a d-line refractive index of the light filter 12.

vd is an Abbe number of an optical element. vd1 is the Abbe number of the first lens 111, vd2 is the Abbe number of the second lens 112, vd3 is the Abbe number of the third lens 113, vd4 is the Abbe number of the fourth lens 114, vd5 is the Abbe number of the fifth lens 115, vd6 is an Abbe number of the sixth lens 116, and vdg is an Abbe number of the light filter 12.

**Table 2 below shows aspheric coefficients of lenses in a lens assembly according to Embodiment 1 of this application.**

| | | Conic coefficient k | A4 | A6 | A8 | A10 |
|---|---|---|---|---|---|---|
| L1 | R1 | 0.00E+00 | 8.36E-02 | -4.83E-02 | 2.53E-02 | -9.98E-03 |
| | R2 | 0.00E+00 | 7.89E-02 | -1.87E-02 | 1.14E-02 | -1.72E-03 |
| L2 | R3 | 0.00E+00 | -2.02E-01 | 5.53E-02 | -1.54E-02 | 8.29E-03 |
| | R4 | 0.00E+00 | -1.91E-01 | 4.82E-02 | -1.80E-02 | 9.52E-03 |
| L3 | R5 | 0.00E+00 | 1.19E-01 | 4.20E-03 | -4.29E-03 | 2.05E-03 |
| | R6 | 0.00E+00 | 6.22E-02 | 5.84E-02 | -1.09E-02 | -8.24E-03 |
| L4 | R7 | -2.25E-01 | 1.30E+01 | -1.38E-01 | 1.07E-01 | -1.49E-02 |
| | R8 | 0.00E+00 | -3.53E-01 | -1.97E-02 | 1.23E-01 | 1.95E-02 |
| L5 | R9 | 1.70E+00 | 9.94E-01 | 7.08E-01 | -1.79E-01 | -9.40E-02 |
| | R10 | -9.96E-01 | 1.40E+01 | -3.12E+00 | 2.58E-01 | 4.55E-02 |
| L6 | R11 | 0.00E+00 | -1.20E+00 | -8.05E-01 | 3.74E-01 | 1.69E-01 |
| | R12 | 0.00E+00 | 3.60E-01 | -6.78E-02 | 6.90E-01 | -1.49E-01 |
| | | A12 | A14 | A16 | A18 | A20 |
| L1 | R1 | 3.16E-03 | -6.70E-04 | -1.30E-05 | 1.05E-04 | -8.60E-05 |

(continued)

|  |  | A12 | A14 | A16 | A18 | A20 |
|---|---|---|---|---|---|---|
|  | R2 | 7.05E-04 | -2.53E-04 | 1.07E-04 | -8.40E-05 | 4.50E-05 |
| L2 | R3 | -1.79E-03 | 5.45E-04 | -6.40E-05 | -1.19E-04 | 1.72E-04 |
|  | R4 | -4.12E-03 | 1.97E-03 | -9.27E-04 | 3.97E-04 | -1.69E-04 |
| L3 | R5 | -7.57E-04 | 3.65E-04 | -1.69E-04 | 1.10E-04 | -8.80E-05 |
|  | R6 | 1.04E-02 | -8.10E-03 | 5.74E-03 | -3.48E-03 | 1.83E-03 |
| L4 | R7 | -1.09E-02 | 5.12E-03 | 1.47E-03 | -1.55E-03 | 1.32E-04 |
|  | R8 | -4.02E-02 | -3.20E-05 | 9.42E-03 | 3.51E-03 | -3.86E-03 |
| L5 | R9 | 1.58E-01 | -7.05E-02 | -3.89E-04 | 4.75E-04 | 1.71E-02 |
|  | R10 | 2.63E-02 | -3.92E-03 | -1.85E-03 | 4.03E-04 | 2.63E-03 |
| L6 | R11 | 3.27E-01 | 9.50E-02 | 6.34E-03 | -2.20E-02 | 4.75E-02 |
|  | R12 | 3.37E-01 | -7.91E-03 | 6.17E-02 | 6.10E-02 | 3.33E-02 |
|  |  | A22 | A24 | A26 | A28 | A30 |
| L1 | R1 | 3.80E-05 | -1.80E-05 | -5 . 00E-06 | 2.00E-06 | -1.40E-05 |
|  | R2 | 1.00E-06 | -2.80E-05 | 3.70E-05 | -1.50E-05 | 8.00E-06 |
| L2 | R3 | -2.25E-04 | 2.18E-04 | -1.55E-04 | 7.10E-05 | -3.80E-05 |
|  | R4 | 9.30E-05 | -9.00E-05 | 1.14E-04 | -9.70E-05 | 5.40E-05 |
| L3 | R5 | 8.20E-05 | -6.00E-05 | 8.00E-06 | 2.00E-06 | -2.20E-05 |
|  | R6 | -8.28E-04 | 3.67E-04 | -1.82E-04 | 7.60E-05 | -1.90E-05 |
| L4 | R7 | 4.69E-04 | -1.93E-04 | -1.99E-04 | 5.20E-05 | 6.00E-05 |
|  | R8 | -2.18E-03 | 2.88E-03 | -2. 54E-04 | -5.58E-04 | 1.45E-04 |
| L5 | R9 | -1.14E-02 | 3.66E-03 | 1.23E-03 | -1.03E-03 | 2.71E-04 |
|  | R10 | -2.94E-03 | -7.92E-04 | -5.22E-04 | 3.86E-04 | 1.14E-04 |
| L6 | R11 | 1.28E-02 | 5.12E-02 | 9.64E-03 | 1.47E-02 | -2.62E-03 |
|  | R12 | 4.04E-02 | 2.30E-02 | 2.00E-05 | 1.68E-02 | 8.62E-03 |

It can be learned from Table 2 that, all lenses in the lens assembly 11 are aspheric lenses, that is, the lens assembly 11 includes 12 aspheric surfaces. An aspheric surface type z of each lens in the lens assembly 11 may be calculated by using the following aspheric surface formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 3.

For optical parameters of the lens assembly 11 including the foregoing lenses, refer to the following Table 3.

**Table 3 shows optical parameters of a lens assembly according to Embodiment 1 of this application.**

| Focal length f | 5.39 mm |
|---|---|
| Value of F-number | 1.73 |
| Image height half IMH | 5.22 mm |
| 2×IMH/TTL/F# | 0.98 |

(continued)

| Wavelength | 650 nm, 610 nm, 555 nm, 510 nm, 470 nm |
| --- | --- |

It can be learned from Table 3 that, the lens assembly 11 provided in Embodiment 1 of this application has both features of a large aperture and a large optical format, and has a small total track length.

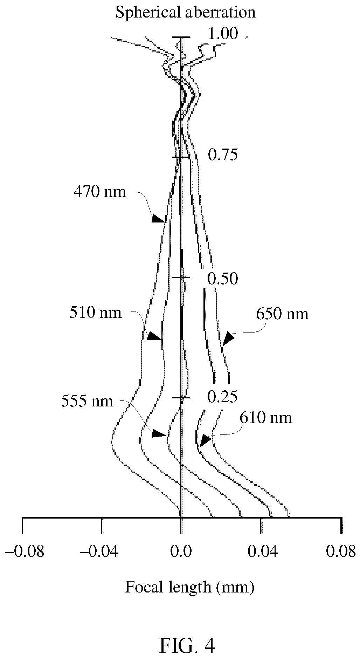

FIG. 4 is an axial chromatic aberration curve diagram of a lens assembly according to Embodiment 1 of this application. An example axial chromatic aberration in FIG. 4 is an axial chromatic aberration of light with wavelengths of 650 nm, 610 nm, 555 nm, 510 nm, and 470 nm after the light passes through the lens assembly 11. A horizontal coordinate represents a size of a spherical aberration, and a vertical coordinate represents a normalized aperture. It can be learned from FIG. 4 that the axial chromatic aberration of the light after the light passes through the lens assembly 11 is small.

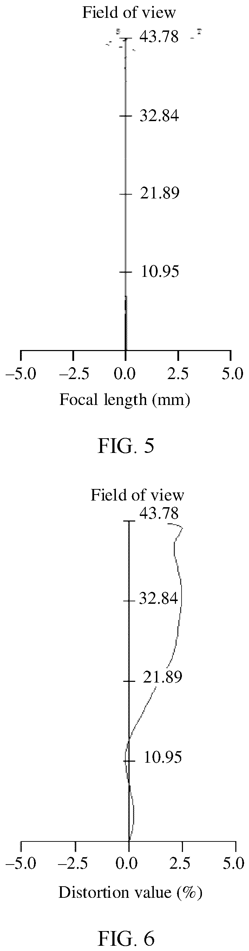

FIG. 5 is a diagram of astigmatic and field curves of a lens assembly according to Embodiment 1 of this application. FIG. 5 shows a diagram of astigmatic and field curves of light with a wavelength of 555 nm after the light passes through the lens assembly 11. S is a field curve in a sagittal direction, T is a field curve in a meridian direction, a horizontal coordinate represents a size of the field curve, a horizontal distance between T and S represents a size of astigmatism, and a vertical coordinate represents a field of view. It can be learned from FIG. 5 that, the lens assembly 11 has small field curves in both the sagittal direction and the meridian direction, and has high imaging quality.

FIG. 6 is a distortion curve diagram of a lens assembly according to Embodiment 1 of this application. FIG. 6 shows a distortion curve of light with a wavelength of 555 nm after the light passes through the lens assembly 11. A horizontal coordinate is a distortion size, and a vertical coordinate is a field of view. It can be learned from FIG. 6 that, distortion of imaging performed by the lens assembly 11 is small, and a difference between an imaging shape and an ideal shape is small, so that a deformation difference requirement is met and high imaging quality is achieved.

**Embodiment 2**

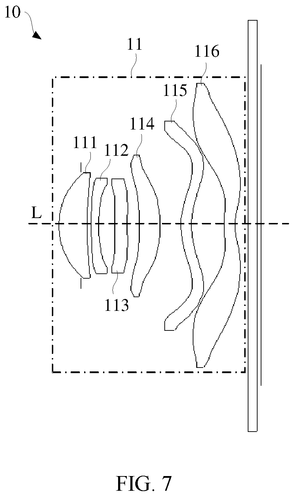

FIG. 7 is a schematic diagram of a simulation structure of a camera module according to Embodiment 2 of this application.

In this embodiment of this application, with reference to FIG. 7, the quantity N of the lenses included in the lens assembly 11 is 6. From the object side to the image side along the optical axis L, the first lens 111, the second lens 112, the third lens 113, the fourth lens 114, the fifth lens 115, and the sixth lens 116 are sequentially included. The first lens 111, the second lens 112, the third lens 113, the fourth lens 114, the fifth lens 115, and the sixth lens 116 are all plastic lenses.

The image height half IMH of the lens assembly 11, the total track length TTL of the lens assembly 11, and the F-number F# of the lens assembly 11 meet: $2 \times IMH/(TTL \times F\#)=1.01$.

The first lens 111 has a positive focal power, at least the part that is of the image side surface of the first lens 111 and that corresponds to the optical axis is a concave surface, and the second lens 112 has a negative focal power.

The refractive index nd1 of the first lens 111 is 1.55, the refractive index nd2 of the second lens 112 is 1.68, and the refractive index nd1 of the first lens 111 and the refractive index nd2 of the second lens 112 meet: nd2-nd1=0.13.

The Abbe number vd1 of the first lens 111 is 56.14, the Abbe number vd2 of the second lens 112 is 19.25, and the Abbe number vd1 of the first lens 111 and the Abbe number vd2 of the second lens 112 meet: vd1-vd2=36.89.

The focal length f1 of the first lens 111 is 5.42 mm.

A focal length f2 of the second lens 112 is -14.85 mm.

The curvature radius R2 of the image side surface of the first lens 111 is 14.21 mm, the curvature radius R3 of the object side surface of the second lens 112 is 7.56 mm, and the curvature radius R2 of the image side surface of the first lens 111 and the curvature radius R3 of the object side surface of the second lens 112 meet: R2/R3=1.88.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius R5 of the object side surface of the third lens 113 is -8.89 mm.

The fourth lens 114 has a positive focal power, and at least the part that is of the image side surface of the fourth lens 114 and that corresponds to the optical axis is a convex surface.

The focal length f3 of the third lens 113 is -249.89 mm, the focal length f4 of the fourth lens 114 is 13.34 mm, and the focal length f3 of the third lens 113 and the focal length f4 of the fourth lens 114 meet: |f3/f4|=18.73.

The total focal length f of the lens assembly 11 is 5.40, and the focal length f4 of the fourth lens 114 and the total focal length f of the lens assembly 11 meet: f4/f=2.47.

A refractive index nd4 of the fourth lens 114 is 1.55.

The Abbe number vd2 of the second lens 112 is 19.25, the Abbe number vd3 of the third lens 113 is 19.25, the Abbe number vd4 of the fourth lens 114 is 56.14, and the Abbe number vd2 of the second lens 112, the Abbe number vd3 of the third lens 113, and the Abbe number vd4 of the fourth lens 114 meet: vd2+vd3+vd4=94.63.

The distance d45 from the image side surface of the fourth lens 114 to the object side surface of the fifth lens 115 in the optical axis direction is 0.68, the total track length TTL of the lens assembly 11 is 6.57, and the distance d45 from the image side surface of the fourth lens 114 to the object side surface of the fifth lens 115 in the optical axis direction meets: d45/TTL=0.10.

The Abbe number vd3 of the third lens 113 is 19.25, the Abbe number vd5 of the fifth lens 115 is 20.35, and the Abbe number vd3 of the third lens 113 and the Abbe number vd5 of the fifth lens 115 meet: vd3/vd5=0.95.

At least a part that is of an image side surface of the sixth lens 116 and that corresponds to the optical axis is a concave surface, and the focal length f6 of the sixth lens 116 is -5.51 mm.

The focal length fi of each lens and the total focal length of the lens assembly 11 meet: $\Sigma|f/fi|=3.00$, and i=1...6.

**Table 4 below shows optical parameters of optical elements in a camera module according to Embodiment 2 of this application.**

|  | R |  | d |  | nd |  | vd |  |
|---|---|---|---|---|---|---|---|---|
| S1 | R0 | ∞ | d0 | -0.72 |  |  |  |  |
| L1 | R1 | 2.25 | d1 | 0.91 | nd1 | 1.546 | vd1 | 56.14 |
|  | R2 | 14.21 | d2 | 0.14 |  |  |  |  |
| L2 | R3 | 7.56 | d3 | 0.25 | nd2 | 1.678 | vd2 | 19.25 |
|  | R4 | 3.54 | d4 | 0.53 |  |  |  |  |
| L3 | R5 | -8.89 | d5 | 0.41 | nd3 | 1.678 | vd3 | 19.25 |
|  | R6 | -9.70 | d6 | 0.39 |  |  |  |  |
| L4 | R7 | -10.93 | d7 | 0.67 | nd4 | 1.546 | vd4 | 56.14 |
|  | R8 | -4.43 | d8 | 0.68 |  |  |  |  |
| L5 | R9 | -10.04 | d9 | 0.35 | nd5 | 1.667 | vd5 | 20.35 |
|  | R10 | -10.76 | d10 | 1.07 |  |  |  |  |
| L6 | R11 | -12.16 | d11 | 0.35 | nd6 | 1.546 | vd6 | 56.14 |
|  | R12 | -10.13 | d12 | 0.43 |  |  |  |  |
| IR | R13 | ∞ | d13 | 0.21 | ndg | 1.518 | vdg | 64.17 |
|  | R14 | ∞ | d14 | 0.18 |  |  |  |  |

L1 is the first lens 111, L2 is the second lens 112, L3 is the third lens 113, L4 is the fourth lens 114, L5 is the fifth lens 115, L6 is the sixth lens 116, S1 is the aperture stop 118, and IR is the light filter 12.

R is a curvature radius of an optical element (for example, a lens or a light filter) at a position corresponding to the optical axis. For specific meanings of R0, R1, ..., and R14, refer to Embodiment 1. Details are not described again in this embodiment of this application.

d is a thickness of an optical element along the optical axis direction or a thickness of an air gap between optical elements. For specific meanings of d0, d1, ..., and d14, refer to Embodiment 1. Details are not described again in this embodiment of this application.

nd is a refractive index of a d-line irradiating each optical element. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

**Table 5 below shows aspheric coefficients of lenses in a lens assembly according to Embodiment 2 of this application.**

|  |  | Conic coefficient k | A4 | A6 | A8 | A10 |
|---|---|---|---|---|---|---|
| L1 | R1 | 0.00E+00 | 1.01E-01 | -6.03E-02 | 3.25E-02 | -1.33E-02 |
|  | R2 | 0.00E+00 | 1.10E-01 | -3.16E-02 | 1.75E-02 | -2.38E-03 |
| L2 | R3 | 0.00E+00 | -2.05E-01 | 5.99E-02 | -1.47E-02 | 8.93E-03 |
|  | R4 | 0.00E+00 | -1.96E-01 | 5.08E-02 | -1.64E-02 | 8.63E-03 |

(continued)

| | | Conic coefficient k | A4 | A6 | A8 | A10 |
|---|---|---|---|---|---|---|
| L3 | R5 | 0.00E+00 | 1.46E-01 | 1.83E-03 | -3.99E-03 | 1.87E-03 |
| | R6 | 0.00E+00 | 8.19E-02 | 6.52E-02 | -2.37E-02 | 4.20E-03 |
| L4 | R7 | 2.46E+00 | 1.30E+01 | -1.43E-01 | 1.30E-01 | -2.05E-02 |
| | R8 | 0.00E+00 | -3.52E-01 | -8.05E-02 | 1.60E-01 | 4.35E-02 |
| L5 | R9 | 4.50E+00 | 1.21E+00 | 7.91E-01 | -1.26E-01 | -2.04E-01 |
| | R10 | -1.00E+00 | 1.40E+01 | -3.86E+00 | 4.12E-01 | 1.12E-01 |
| L6 | R11 | 0.00E+00 | -1.33E+00 | -7.30E-01 | 3.77E-01 | 2.07E-01 |
| | R12 | 0.00E+00 | 1.40E+00 | -4.67E-01 | 1.14E+00 | -4.95E-01 |
| | | A12 | A14 | A16 | A18 | A20 |
| L1 | R1 | 4.45E-03 | -1.12E-03 | 1.34E-04 | 6.10E-05 | -5.90E-05 |
| | R2 | 5.06E-04 | 6.00E-04 | -7.28E-04 | 6.21E-04 | -5.03E-04 |
| L2 | R3 | -1.78E-03 | 7.82E-04 | -2.68E-04 | 8.20E-05 | -3.30E-05 |
| | R4 | -3.22E-03 | 1.46E-03 | -6.18E-04 | 2.04E-04 | -5.20E-05 |
| L3 | R5 | -6.29E-04 | 2.74E-04 | -9.90E-05 | 6.00E-05 | -3.70E-05 |
| | R6 | -6.85E-04 | 3.45E-04 | 2.72E-04 | -4.99E-04 | 3.87E-04 |
| L4 | R7 | -1.13E-02 | 1.24E-02 | 3.66E-03 | -8.59E-04 | 2.22E-03 |
| | R8 | -4.06E-02 | -3.35E-02 | 3.26E-02 | 5.01E-03 | -1.41E-02 |
| L5 | R9 | 2.16E-01 | -1.09E-01 | 3.37E-02 | -1.45E-02 | 1.86E-02 |
| | R10 | 1.49E-02 | -3.98E-03 | 1.43E-03 | -7.81E-03 | -4.91E-03 |
| L6 | R11 | 2.40E-01 | 1.83E-01 | -1.56E-02 | 4.73E-04 | 7.74E-02 |
| | R12 | 4.92E-01 | 7.80E-02 | -6.58E-02 | 1.63E-01 | 1.75E-02 |
| | | A22 | A24 | A26 | A28 | A30 |
| L1 | R1 | 3.10E-05 | 9.00E-06 | -2.60E-05 | 2.20E-05 | -1.00E-06 |
| | R2 | 4.02E-04 | -2.96E-04 | 1.95E-04 | -1.01E-04 | 2.50E-05 |
| L2 | R3 | -3.70E-05 | 8.10E-05 | -6.90E-05 | 2.50E-05 | 4.20E-07 |
| | R4 | 1.50E-05 | -2.90E-05 | 5.00E-05 | -5.00E-05 | 1.80E-05 |
| L3 | R5 | 5.10E-05 | -4.50E-05 | 2.10E-05 | -6.00E-06 | 6.00E-06 |
| | R6 | -1.96E-04 | 6.60E-05 | -4.10E-05 | 4.90E-05 | -3.10E-05 |
| L4 | R7 | 2.16E-03 | 6.82E-04 | 7.17E-04 | 7.77E-04 | 3.06E-04 |
| | R8 | 1.17E-02 | -1.53E-02 | 1.59E-02 | -8.74E-03 | 2.03E-03 |
| L5 | R9 | -7.60E-03 | 7.37E-04 | 1.82E-03 | -4.74E-04 | 7.20E-05 |
| | R10 | -4.39E-03 | 1.93E-03 | 5.26E-04 | 5.00E-06 | -5.75E-04 |
| L6 | R11 | 1.14E-02 | 6.23E-02 | -5.82E-03 | 1.60E-02 | -3.91E-03 |
| | R12 | 5.11E-02 | 1.37E-02 | 2.22E-02 | -2.28E-02 | 2.99E-02 |

It can be learned from Table 5 that, all lenses in the lens assembly 11 are aspheric lenses, that is, the lens assembly 11 includes 12 aspheric surfaces. An aspheric surface type z of each lens in the lens assembly 11 may be calculated by using the following aspheric surface formula:

$$z = \frac{c^2 r^2}{1 + \sqrt{1 - (1 + k)c^2 r^2}} + \frac{u^2 (1 - u^2)\sqrt{1 - kc^2 r^2}}{\sqrt{1 - (k + 1)c^2 r^2}} \sum A_i Q_i (u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 7.

For optical parameters of the lens assembly 11 including the foregoing lenses, refer to the following Table 6.

**Table 6 shows optical parameters of a lens assembly according to Embodiment 2 of this application.**

| Focal length f | 5.40 mm |
|---|---|
| Value of F-number | 1.57 |
| Image height half IMH | 5.22 mm |
| 2×IMH/TTL/F# | 1.01 |
| Wavelength | 650 nm, 610 nm, 555 nm, 510 nm, 470 nm |

It can be learned from Table 6 that, the lens assembly 11 provided in Embodiment 2 of this application has both features of a large aperture and a large optical format, and has a small total track length.

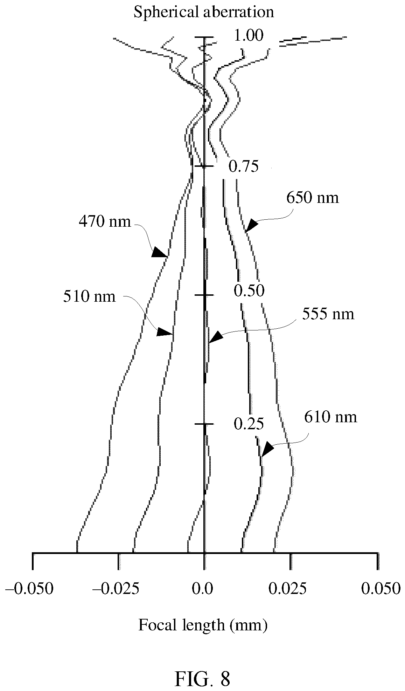

FIG. 8 is an axial chromatic aberration curve diagram of a lens assembly according to Embodiment 2 of this application. An example axial chromatic aberration in FIG. 8 is an axial chromatic aberration of light with wavelengths of 650 nm, 610 nm, 555 nm, 510 nm, and 470 nm after the light passes through the lens assembly 11. It can be learned from FIG. 8 that, the axial chromatic aberration of the light after the light passes through the lens assembly 11 is small.

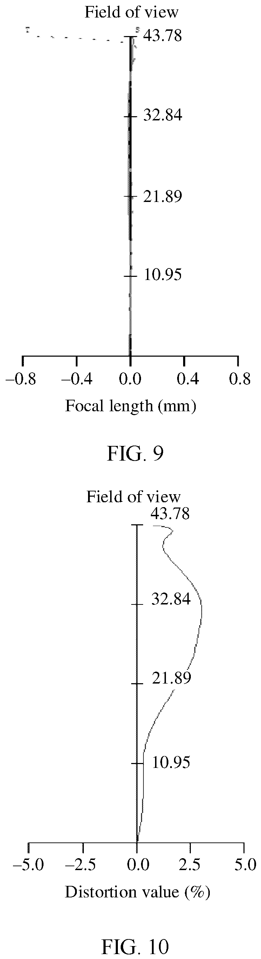

FIG. 9 is a diagram of astigmatic and field curves of a lens assembly according to Embodiment 2 of this application. FIG. 9 shows a diagram of astigmatic and field curves of light with a wavelength of 555 nm after the light passes through the lens assembly 11. It can be learned from FIG. 9 that, the lens assembly 11 has small field curves in both the sagittal direction and the meridian direction, and has high imaging quality.

FIG. 10 is a distortion curve diagram of a lens assembly according to Embodiment 2 of this application. FIG. 10 shows a distortion curve of light with a wavelength of 555 nm after the light passes through the lens assembly 11. It can be learned from FIG. 10 that, distortion of imaging performed by the lens assembly 11 is small, and a difference between an imaging shape and an ideal shape is small, so that a deformation difference requirement is met and high imaging quality is achieved.

**Embodiment 3**

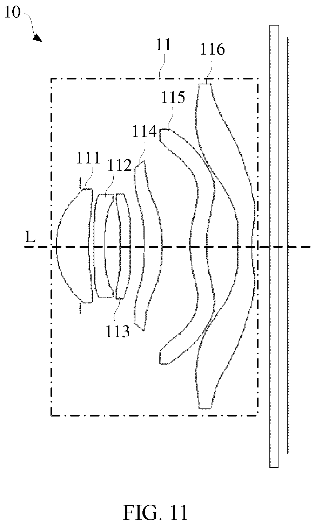

FIG. 11 is a schematic diagram of a simulation structure of a camera module according to Embodiment 3 of this application.

In this embodiment of this application, with reference to FIG. 11, the quantity N of the lenses included in the lens assembly 11 is 6. From the object side to the image side along the optical axis L, the first lens 111, the second lens 112, the third lens 113, the fourth lens 114, the fifth lens 115, and the sixth lens 116 are sequentially included. The first lens 111, the second lens 112, the third lens 113, the fourth lens 114, the fifth lens 115, and the sixth lens 116 are all plastic lenses.

The image height half IMH of the lens assembly 11, the total track length TTL of the lens assembly 11, and the F-number F# of the lens assembly 11 meet: 2×IMH/(TTL×F#)=0.95.

The first lens 111 has a positive focal power, at least the part that is of the image side surface of the first lens 111 and that corresponds to the optical axis is a concave surface, and the second lens 112 has a negative focal power.

The refractive index nd1 of the first lens 111 is 1.54, the refractive index nd2 of the second lens 112 is 1.69, and the refractive index nd1 of the first lens 111 and the refractive index nd2 of the second lens 112 meet: nd2-nd1=0.15.

The Abbe number vd1 of the first lens 111 is 56.00, the Abbe number vd2 of the second lens 112 is 18.07, and the Abbe number vd1 of the first lens 111 and the Abbe number vd2 of the second lens 112 meet: vd1-vd2=37.93.

The focal length f1 of the first lens 111 is 4.58 mm.

A focal length f2 of the second lens 112 is -14.15 mm.

The curvature radius R2 of the image side surface of the first lens 111 is 9.80 mm, the curvature radius R3 of the object side surface of the second lens 112 is 6.95 mm, and the curvature radius R2 of the image side surface of the first lens 111 and the curvature radius R3 of the object side surface of the second lens 112 meet: R2/R3=1.41.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius R5 of the object side surface of the third lens 113 is -5.74 mm.

The fourth lens 114 has a positive focal power, and at least the part that is of the image side surface of the fourth lens 114 and that corresponds to the optical axis is a convex surface.

The focal length f3 of the third lens 113 is -162.75 mm, the focal length f4 of the fourth lens 114 is 19.62 mm, and the focal length f3 of the third lens 113 and the focal length f4 of the fourth lens 114 meet: |f3/f4|=8.3.

The total focal length f of the lens assembly 11 is 5.35, and the focal length f4 of the fourth lens 114 and the total focal length f of the lens assembly 11 meet: f4/f=3.67.

A refractive index nd4 of the fourth lens 114 is 1.55.

The Abbe number vd2 of the second lens 112 is 18.07, the Abbe number vd3 of the third lens 113 is 18.07, the Abbe number vd4 of the fourth lens 114 is 55.96, and the Abbe number vd2 of the second lens 112, the Abbe number vd3 of the third lens 113, and the Abbe number vd4 of the fourth lens 114 meet: vd2+vd3+vd4=92.10.

The distance d45 from the image side surface of the fourth lens 114 to the object side surface of the fifth lens 115 in the optical axis direction is 0.70, the total track length TTL of the lens assembly 11 is 5.79, and the distance d45 from the image side surface of the fourth lens 114 to the object side surface of the fifth lens 115 in the optical axis direction meets: d45/TTL=0.12.

The Abbe number vd3 of the third lens 113 is 18.07, the Abbe number vd5 of the fifth lens 115 is 44.88, and the Abbe number vd3 of the third lens 113 and the Abbe number vd5 of the fifth lens 115 meet: vd3/vd5=0.40.

At least a part that is of an image side surface of the sixth lens 116 and that corresponds to the optical axis is a concave surface, and the focal length f6 of the sixth lens 116 is -4.90 mm.

The focal length fi of each lens and the total focal length of the lens assembly 11 meet: $\Sigma|f/fi|=3.17$, and i=1...6.

**Table 7 below shows optical parameters of optical elements in a camera module according to Embodiment 3 of this application.**

|  | R |  | d |  | nd |  | vd |  |
|---|---|---|---|---|---|---|---|---|
| S1 | R0 | ∞ | d0 | -0.60 |  |  |  |  |
| L1 | R1 | 1.84 | d1 | 0.81 | nd1 | 1.545 | vd1 | 56.00 |
|  | R2 | 9.64 | d2 | 0.13 |  |  |  |  |
| L2 | R3 | 6.74 | d3 | 0.27 | nd2 | 1.692 | vd2 | 18.07 |
|  | R4 | 3.14 | d4 | 0.39 |  |  |  |  |
| L3 | R5 | -5.75 | d5 | 0.25 | nd3 | 1.692 | vd3 | 18.07 |
|  | R6 | -5.76 | d6 | 0.36 |  |  |  |  |
| L4 | R7 | -7.54 | d7 | 0.44 | nd4 | 1.546 | vd4 | 55.96 |
|  | R8 | -5.29 | d8 | 0.70 |  |  |  |  |
| 5 | R9 | -4.96 | d9 | 0.41 | nd5 | 1.559 | vd5 | 44.88 |
|  | R10 | -5.14 | d10 | 0.79 |  |  |  |  |
| L6 | R11 | -8.42 | d11 | 0.35 | nd6 | 1.546 | vd6 | 56.14 |
|  | R12 | -8.50 | d12 | 0.45 |  |  |  |  |
| IR | R13 | ∞ | d13 | 0.21 | ndg | 1.518 | vdg | 64.17 |
|  | R14 | ∞ | d14 | 0.22 |  |  |  |  |

L1 is the first lens 111, L2 is the second lens 112, L3 is the third lens 113, L4 is the fourth lens 114, L5 is the fifth lens 115, L6 is the sixth lens 116, S1 is the aperture stop 118, and IR is the light filter 12.

R is a curvature radius of an optical element (for example, a lens or a light filter) at a position corresponding to the optical axis. For specific meanings of R0, R1, ..., and R14, refer to Embodiment 1. Details are not described again in this embodiment of this application.

d is a thickness of an optical element along the optical axis direction or a thickness of an air gap between optical elements. For specific meanings of d0, d1, ..., and d14, refer to Embodiment 1. Details are not described again in this embodiment of this application.

nd is a refractive index of a d-line irradiating each optical element. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

**Table 8 below shows aspheric coefficients of lenses in a lens assembly according to Embodiment 3 of this application.**

| | | Conic coefficient k | A4 | A6 | A8 | A10 |
|---|---|---|---|---|---|---|
| L1 | R1 | 0.00E+00 | 1.00E-01 | -5.15E-02 | 2.50E-02 | -9.02E-03 |
| | R2 | 0.00E+00 | 1.07E-01 | -2.20E-02 | 1.11E-02 | -2.81E-03 |
| L2 | R3 | 0.00E+00 | -1.96E-01 | 5.10E-02 | -1.12E-02 | 4.17E-03 |
| | R4 | 0.00E+00 | -1.98E-01 | 4.75E-02 | -1.51E-02 | 6.27E-03 |
| L3 | R5 | 0.00E+00 | 1.13E-01 | 3.62E-03 | -2.34E-03 | 7.21E-04 |
| | R6 | 0.00E+00 | 8.89E-02 | 3.36E-02 | 1.29E-02 | -2.44E-02 |
| L4 | R7 | 0.00E+00 | -2.88E-01 | -3.22E-02 | 9.07E-02 | 2.97E-02 |
| | R8 | 0.00E+00 | -3.09E-01 | -1.32E-01 | 1.31E-01 | 4.27E-02 |
| L5 | R9 | -8.67E-02 | 6.97E-01 | 6.49E-01 | -7.43E-02 | -8.31E-02 |
| | R10 | 0.00E+00 | 9.36E-01 | 5.27E-01 | -5.17E-02 | 1.70E-01 |
| L6 | R11 | 0.00E+00 | -1.46E+00 | -5.34E-01 | 1.09E-01 | 1.60E-01 |
| | R12 | 0.00E+00 | -4.68E-01 | 2.20E-01 | 3.15E-01 | -8.84E-02 |
| | | A12 | A14 | A16 | A18 | A20 |
| L1 | R1 | 2.50E-03 | -3.91E-04 | -3.50E-05 | 6.80E-05 | -5.90E-05 |
| | R2 | 6.58E-04 | -1.29E-04 | -1.76E-04 | 2.65E-04 | -2. 84E-04 |
| L2 | R3 | -3.72E-04 | -1.49E-04 | -4.20E-05 | 8.90E-05 | -5.00E-05 |
| | R4 | -2.05E-03 | 5.20E-04 | -8.50E-05 | -7.00E-06 | -1.00E-05 |
| L3 | R5 | 7.00E-05 | -8.90E-05 | 7.20E-05 | -2.20E-05 | -1.80E-05 |
| | R6 | 2.14E-02 | -1.57E-02 | 1.15E-02 | -8.04E-03 | 5.30E-03 |
| L4 | R7 | -1.58E-02 | -8.46E-03 | -5.90E-03 | 8.31E-03 | -9.26E-04 |
| | R8 | -1.13E-02 | -1.33E-02 | -8.67E-03 | 1.35E-02 | -4.37E-03 |
| L5 | R9 | 1.00E-01 | -7.14E-02 | 1.55E-02 | 1.19E-02 | -5.93E-03 |
| | R10 | -1.89E-01 | 4.09E-02 | 1.48E-02 | -1.10E-02 | 1.28E-02 |
| L6 | R11 | 2.35E-01 | 5.90E-02 | 4.39E-03 | -9.73E-03 | 1.35E-02 |
| | R12 | 1.91E-01 | 1.04E-01 | 6.97E-02 | -7.37E-03 | -1.62E-02 |
| | | A22 | A24 | A26 | A28 | A30 |
| L1 | R1 | 7.20E-05 | -8.40E-05 | 5.00E-05 | -1.80E-05 | -1.50E-05 |
| | R2 | 2.53E-04 | -1.61E-04 | 2.90E-05 | 5.50E-05 | -2.70E-05 |
| L2 | R3 | -3.20E-05 | 3.90E-05 | -7.00E-06 | -1.20E-05 | -2.30E-05 |
| | R4 | 6.40E-05 | -1.10E-04 | 1.41E-04 | -1.00E-04 | 5.10E-05 |
| L3 | R5 | 1.50E-05 | -1.40E-05 | -9.00E-06 | 1.00E-06 | -1.00E-06 |
| | R6 | -3.23E-03 | 1.77E-03 | -8.66E-04 | 3.28E-04 | -7.20E-05 |
| L4 | R7 | -1.19E-04 | -8.90E-05 | -7.60E-04 | 4.55E-04 | 4.00E-06 |
| | R8 | 3.21E-03 | -2.74E-03 | -2.80E-05 | 6.02E-04 | 1.09E-04 |
| L5 | R9 | -3.94E-03 | 7.39E-03 | -6.41E-04 | -1.38E-03 | -3.50E-05 |
| | R10 | -1.33E-02 | 8.04E-03 | 4.17E-03 | -3.02E-03 | -2.02E-04 |

(continued)

|  |  | A22 | A24 | A26 | A28 | A30 |
|---|---|---|---|---|---|---|
| L6 | R11 | 1.48E-02 | 2.24E-02 | 1.37E-02 | 6.70E-03 | 1.17E-03 |
|  | R12 | 2.11E-02 | 3.04E-02 | 6.42E-03 | 7.48E-03 | 5.30E-03 |

It can be learned from Table 8 that, all lenses in the lens assembly 11 are aspheric lenses, that is, the lens assembly 11 includes 12 aspheric surfaces. An aspheric surface type z of each lens in the lens assembly 11 may be calculated by using the following aspheric surface formula:

$$z = \frac{c^2 r^2}{1 + \sqrt{1 - (1 + k)c^2 r^2}} + \frac{u^2 (1 - u^2) \sqrt{1 - kc^2 r^2}}{\sqrt{1 - (k + 1)c^2 r^2}} \sum A_i Q_i (u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 11.

For optical parameters of the lens assembly 11 including the foregoing lenses, refer to the following Table 6.

**Table 9 shows optical parameters of a lens assembly according to Embodiment 3 of this application.**

| Focal length f | 5.35 mm |
|---|---|
| Value of F-number | 1.89 |
| Image height half IMH | 5.22 mm |
| 2×IMH/TTL/F# | 0.95 |
| Wavelength | 650 nm, 610 nm, 555 nm, 510 nm, 470 nm |

It can be learned from Table 9 that, the lens assembly 11 provided in Embodiment 3 of this application has both features of a large aperture and a large optical format, and has a small total track length.

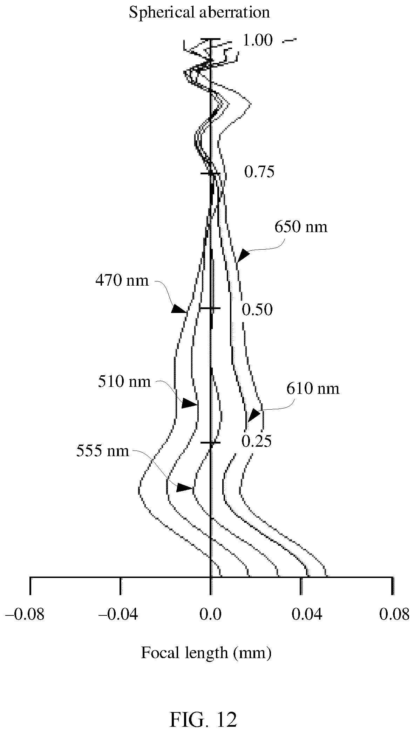

FIG. 12 is an axial chromatic aberration curve diagram of a lens assembly according to Embodiment 3 of this application. An example axial chromatic aberration in FIG. 12 is an axial chromatic aberration of light with wavelengths of 650 nm, 610 nm, 555 nm, 510 nm, and 470 nm after the light passes through the lens assembly 11. It can be learned from FIG. 12 that, the axial chromatic aberration of the light after the light passes through the lens assembly 11 is small.

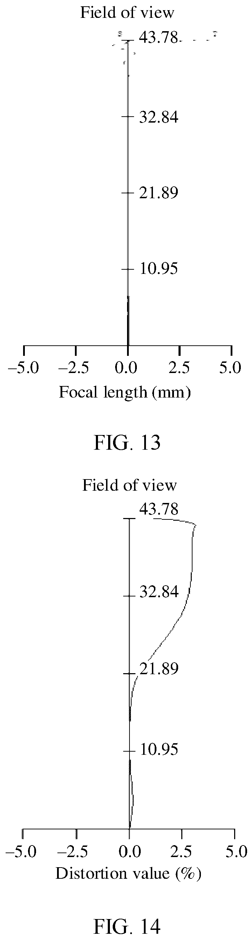

FIG. 13 is a diagram of astigmatic and field curves of a lens assembly according to Embodiment 3 of this application. FIG. 13 shows a diagram of astigmatic and field curves of light with a wavelength of 555 nm after the light passes through the lens assembly 11. It can be learned from FIG. 13 that, the lens assembly 11 has small field curves in both the sagittal direction and the meridian direction, and has high imaging quality.

FIG. 14 is a distortion curve diagram of a lens assembly according to Embodiment 3 of this application. FIG. 14 shows a distortion curve of light with a wavelength of 555 nm after the light passes through the lens assembly 11. It can be learned from FIG. 14 that, distortion of imaging performed by the lens assembly 11 is small, and a difference between an imaging shape and an ideal shape is small, so that a deformation difference requirement is met and high imaging quality is achieved.

**Embodiment 4**

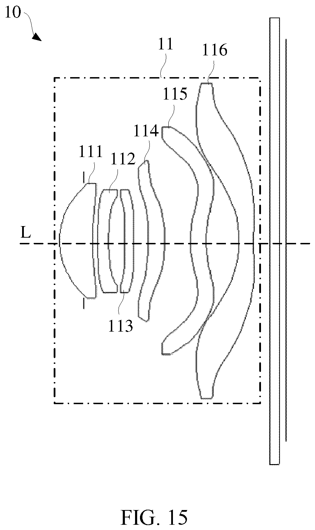

FIG. 15 is a schematic diagram of a simulation structure of a camera module according to Embodiment 4 of this application.

In this embodiment of this application, with reference to FIG. 15, the quantity N of the lenses included in the lens assembly 11 is 6. From the object side to the image side along the optical axis L, the first lens 111, the second lens 112, the third lens 113, the fourth lens 114, the fifth lens 115, and the sixth lens 116 are sequentially included. The first lens 111, the second lens 112, the third lens 113, the fourth lens 114, the fifth lens 115, and the sixth lens 116 are all plastic lenses.

The image height half IMH of the lens assembly 11, the total track length TTL of the lens assembly 11, and the F-number F# of the lens assembly 11 meet: 2×IMH/(TTL×F#)=1.00.

The first lens 111 has a positive focal power, at least the part that is of the image side surface of the first lens 111 and that corresponds to the optical axis is a concave surface, and the second lens 112 has a negative focal power.

The refractive index nd1 of the first lens 111 is 1.54, the refractive index nd2 of the second lens 112 is 1.69, and the refractive index nd1 of the first lens 111 and the refractive index nd2 of the second lens 112 meet: nd2-nd1=0.14.

The Abbe number vd1 of the first lens 111 is 56.00, the Abbe number vd2 of the second lens 112 is 18.51, and the Abbe number vd1 of the first lens 111 and the Abbe number vd2 of the second lens 112 meet: vd1-vd2=37.49.

The focal length f1 of the first lens 111 is 4.78 mm.

A focal length f2 of the second lens 112 is -16.03 mm.

The curvature radius R2 of the image side surface of the first lens 111 is 10.30 mm, the curvature radius R3 of the object side surface of the second lens 112 is 6.41 mm, and the curvature radius R2 of the image side surface of the first lens 111 and the curvature radius R3 of the object side surface of the second lens 112 meet: R2/R3=1.61.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius R5 of the object side surface of the third lens 113 is -6.74 mm.

The fourth lens 114 has a positive focal power, and at least the part that is of the image side surface of the fourth lens 114 and that corresponds to the optical axis is a convex surface.

The focal length f3 of the third lens 113 is -514.96 mm, the focal length f4 of the fourth lens 114 is 21.41 mm, and the focal length f3 of the third lens 113 and the focal length f4 of the fourth lens 114 meet: |f3/f4|=24.06.

The total focal length f of the lens assembly 11 is 5.35, and the focal length f4 of the fourth lens 114 and the total focal length f of the lens assembly 11 meet: f4/f=4.00.

A refractive index nd4 of the fourth lens 114 is 1.55.

The Abbe number vd2 of the second lens 112 is 18.51, the Abbe number vd3 of the third lens 113 is 18.21, the Abbe number vd4 of the fourth lens 114 is 55.96, and the Abbe number vd2 of the second lens 112, the Abbe number vd3 of the third lens 113, and the Abbe number vd4 of the fourth lens 114 meet: vd2+vd3+vd4=92.68.

The distance d45 from the image side surface of the fourth lens 114 to the object side surface of the fifth lens 115 in the optical axis direction is 0.66, the total track length TTL of the lens assembly 11 is 5.78, and the distance d45 from the image side surface of the fourth lens 114 to the object side surface of the fifth lens 115 in the optical axis direction meets: d45/TTL=0.11.

The Abbe number vd3 of the third lens 113 is 18.21, the Abbe number vd5 of the fifth lens 115 is 56.00, and the Abbe number vd3 of the third lens 113 and the Abbe number vd5 of the fifth lens 115 meet: vd3/vd5=0.33.

At least a part that is of an image side surface of the sixth lens 116 and that corresponds to the optical axis is a concave surface, and the focal length f6 of the sixth lens 116 is -4.42 mm.

The focal length fi of each lens and the total focal length of the lens assembly 11 meet: Σ|f/fi|=3.24, and i=1...6.

**Table 10 below shows optical parameters of optical elements in a camera module according to Embodiment 4 of this application.**

|  | R |  | d |  | nd |  | vd |  |
|---|---|---|---|---|---|---|---|---|
| S1 | R0 | ∞ | d0 | -0.63 |  |  |  |  |
| L1 | R1 | 1.93 | d1 | 0.84 | nd1 | 1.545 | vd1 | 56.00 |
|  | R2 | 10.43 | d2 | 0.14 |  |  |  |  |
| L2 | R3 | 6.34 | d3 | 0.27 | nd2 | 1.685 | vd2 | 18.51 |
|  | R4 | 3.11 | d4 | 0.41 |  |  |  |  |
| L3 | R5 | -6.80 | d5 | 0.24 | nd3 | 1.690 | vd3 | 18.21 |
|  | R6 | -6.69 | d6 | 0.37 |  |  |  |  |
| L4 | R7 | -7.70 | d7 | 0.41 | nd4 | 1.546 | vd4 | 55.96 |
|  | R8 | -5.76 | d8 | 0.66 |  |  |  |  |
| L5 | R9 | -5.13 | d9 | 0.41 | nd5 | 1.545 | vd5 | 56.00 |
|  | R10 | -5.30 | d10 | 0.83 |  |  |  |  |
| L6 | R11 | -9.29 | d11 | 0.38 | nd6 | 1.546 | vd6 | 56.14 |
|  | R12 | -8.33 | d12 | 0.42 |  |  |  |  |
| IR | R13 | ∞ | d13 | 0.21 | ndg | 1.518 | vdg | 64.17 |
|  | R14 | ∞ | d14 | 0.19 |  |  |  |  |

L1 is the first lens 111, L2 is the second lens 112, L3 is the third lens 113, L4 is the fourth lens 114, L5 is the fifth lens 115, L6 is the sixth lens 116, S1 is the aperture stop 118, and IR is the light filter 12.

R is a curvature radius of an optical element (for example, a lens or a light filter) at a position corresponding to the optical axis. For specific meanings of R0, R1, ..., and R14, refer to Embodiment 1. Details are not described again in this embodiment of this application.

d is a thickness of an optical element along the optical axis direction or a thickness of an air gap between optical elements. For specific meanings of d0, d1, ..., and d14, refer to Embodiment 1. Details are not described again in this embodiment of this application.

nd is a refractive index of a d-line irradiating each optical element. For specific meanings of nd1, nd2, ..., and ndg, refer to Embodiment 1. Details are not described again in this embodiment of this application.

vd is an Abbe number of an optical element. For specific meanings of vd1, vd2, ..., and vdg, refer to Embodiment 1. Details are not described again in this embodiment of this application.

**Table 11 below shows aspheric coefficients of lenses in a lens assembly according to Embodiment 4 of this application.**

| | | Conic coefficient k | A4 | A6 | A8 | A10 |
|---|---|---|---|---|---|---|
| L1 | R1 | 0.00E+00 | 1.27E-01 | -5.95E-02 | 2.72E-02 | -9.07E-03 |
| | R2 | 0.00E+00 | 1.23E-01 | -2.44E-02 | 1.32E-02 | -2.94E-03 |
| L2 | R3 | 0.00E+00 | -1.97E-01 | 5.12E-02 | -7.99E-03 | 3.43E-03 |
| | R4 | 0.00E+00 | -2.09E-01 | 4.90E-02 | -1.28E-02 | 4.44E-03 |
| L3 | R5 | 0.00E+00 | 1.21E-01 | 6.03E-03 | -3.52E-03 | 6.45E-04 |
| | R6 | 0.00E+00 | 7.15E-02 | 5.71E-02 | -1.55E-02 | -1.62E-03 |
| L4 | R7 | 0.00E+00 | -2.87E-01 | -1.80E-02 | 8.91E-02 | 2.60E-02 |
| | R8 | 0.00E+00 | -3.62E-01 | -1.28E-01 | 1.31E-01 | 4.51E-02 |
| L5 | R9 | -2.08E-01 | 5.63E-01 | 7.02E-01 | -7.76E-02 | -5.10E-02 |
| | R10 | 0.00E+00 | 1.19E+00 | 3.09E-01 | 8.03E-02 | 1.29E-01 |
| L6 | R11 | 0.00E+00 | -1.65E+00 | -6.22E-01 | 4.79E-02 | 1.01E-01 |
| | R12 | 0.00E+00 | -7.88E-01 | 3.68E-01 | 2.67E-01 | -1.56E-01 |
| | | A12 | A14 | A16 | A18 | A20 |
| L1 | R1 | 2.28E-03 | -2.52E-04 | 1.70E-05 | 1.50E-05 | -2.50E-05 |
| | R2 | 3.44E-04 | 1.05E-04 | -3.07E-04 | 2.50E-04 | -2.12E-04 |
| L2 | R3 | -3.06E-04 | -2.80E-05 | -1.84E-04 | 5.00E-05 | 1.50E-04 |
| | R4 | -5.75E-04 | -5.09E-04 | 5.45E-04 | -4.37E-04 | 2.58E-04 |
| L3 | R5 | 4.62E-04 | -4.11E-04 | 3.50E-04 | -2.08E-04 | 8.30E-05 |
| | R6 | 3.90E-03 | -2.18E-03 | 1.25E-03 | -6.68E-04 | 3.84E-04 |
| L4 | R7 | -2.07E-02 | -2.09E-03 | -1.01E-02 | 1.35E-02 | -6.36E-03 |
| | R8 | -4.16E-03 | -1.86E-02 | -7.28E-03 | 1.30E-02 | -3.02E-03 |
| L5 | R9 | 6.73E-02 | -5.60E-02 | 1.09E-02 | 2.04E-02 | -1.22E-02 |
| | R10 | -2.07E-01 | 7.63E-02 | -1.17E-02 | 9.26E-03 | 9.15E-04 |
| L6 | R11 | 1.67E-01 | 4.69E-02 | -1.69E-02 | -2.10E-02 | 2.07E-02 |
| | R12 | 1.09E-01 | 1.03E-01 | 2.41E-02 | -1.76E-02 | 2.53E-03 |
| | | A22 | A24 | A26 | A28 | A30 |
| L1 | R1 | 9.00E-05 | -4.80E-05 | -3.10E-05 | 5.10E-05 | -3.40E-05 |
| | R2 | 1.97E-04 | -9.80E-05 | -2.80E-05 | 1.15E-04 | -5.70E-05 |

(continued)

| | | A22 | A24 | A26 | A28 | A30 |
|---|---|---|---|---|---|---|
| L2 | R3 | -3.53E-04 | 3.96E-04 | -3.10E-04 | 1.69E-04 | -1.02E-04 |
| | R4 | -5.00E-05 | -7.80E-05 | 2.02E-04 | -2.17E-04 | 1.26E-04 |
| L3 | R5 | -6.20E-05 | 4.10E-05 | -7.40E-05 | 5.50E-05 | -2.50E-05 |
| | R6 | -2.98E-04 | 2.54E-04 | -3.04E-04 | 1.94E-04 | -1.11E-04 |
| L4 | R7 | 4.65E-03 | -3.41E-03 | 1.27E-03 | -5.85E-04 | -5 . 00E-06 |
| | R8 | 4.13E-03 | -4.40E-03 | 9.73E-04 | -4.74E-04 | 6.91E-04 |
| L5 | R9 | -5.23E-03 | 1.09E-02 | -1.24E-03 | -1.64E-03 | 1.47E-04 |
| | R10 | -1.42E-02 | 1.37E-02 | 1.65E-03 | -3.18E-03 | -1.54E-04 |
| L6 | R11 | 7.90E-03 | 3.28E-02 | 1.61E-02 | 1.23E-02 | 3.04E-03 |
| | R12 | 4.82E-02 | 1.96E-02 | -8.78E-04 | 5.78E-03 | 2.86E-03 |

It can be learned from Table 11 that, all lenses in the lens assembly 11 are aspheric lenses, that is, the lens assembly 11 includes 12 aspheric surfaces. An aspheric surface type z of each lens in the lens assembly 11 may be calculated by using the following aspheric surface formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 15.

For optical parameters of the lens assembly 11 including the foregoing lenses, refer to the following Table 12.

**Table 12 shows optical parameters of a lens assembly according to Embodiment 4 of this application.**

| Focal length f | 5.35 mm |
|---|---|
| Value of F-number | 1.80 |
| Image height half IMH | 5.22 mm |
| 2×IMH/TTL/F# | 1.00 |
| Wavelength | 650 nm, 610 nm, 555 nm, 510 nm, 470 nm |

It can be learned from Table 12 that, the lens assembly 11 provided in Embodiment 4 of this application has both features of a large aperture and a large optical format, and has a small total track length.

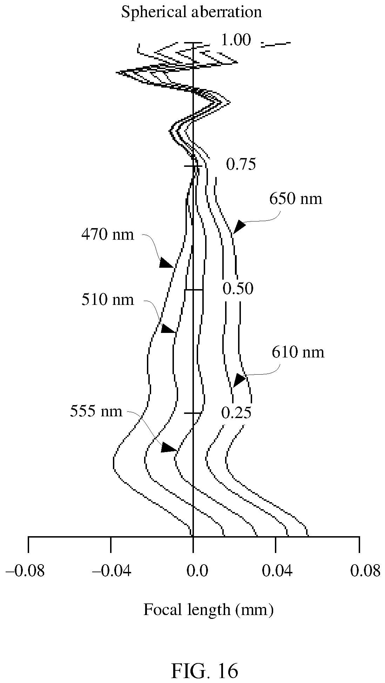

FIG. 16 is an axial chromatic aberration curve diagram of a lens assembly according to Embodiment 4 of this application. An example axial chromatic aberration in FIG. 16 is an axial chromatic aberration of light with wavelengths of 650 nm, 610 nm, 555 nm, 510 nm, and 470 nm after the light passes through the lens assembly 11. It can be learned from FIG. 16 that, the axial chromatic aberration of the light after the light passes through the lens assembly 11 is small.

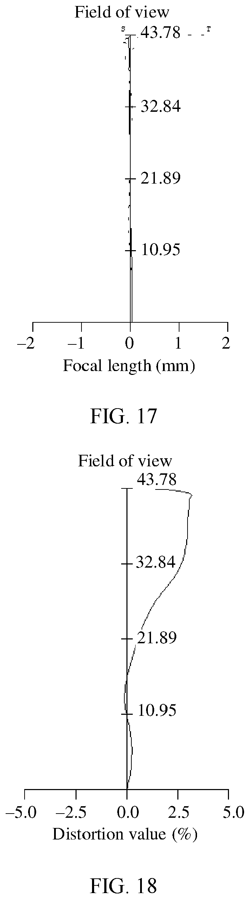

FIG. 17 is a diagram of astigmatic and field curves of a lens assembly according to Embodiment 4 of this application. FIG. 17 shows a diagram of astigmatic and field curves of light with a wavelength of 555 nm after the light passes through the lens assembly 11. It can be learned from FIG. 17 that, the lens assembly 11 has small field curves in both the sagittal direction and the meridian direction, and has high imaging quality.

FIG. 18 is a distortion curve diagram of a lens assembly according to Embodiment 4 of this application. FIG. 18 shows a distortion curve of light with a wavelength of 555 nm after the light passes through the lens assembly 11. It can be learned from FIG. 18 that, distortion of imaging performed by the lens assembly 11 is small, and a difference between an imaging shape and an ideal shape is small, so that a deformation difference requirement is met and high imaging quality is achieved.

**Embodiment 5**

FIG. 19 is a schematic diagram of a simulation structure of a camera module according to Embodiment 5 of this application.

In this embodiment of this application, with reference to FIG. 19, the quantity N of the lenses included in the lens assembly 11 is 7. From the object side to the image side along the optical axis L, the first lens 111, the second lens 112, the third lens 113, the fourth lens 114, the fifth lens 115, the sixth lens 116, and the seventh lens 117 are sequentially included. The first lens 111, the second lens 112, the third lens 113, the fourth lens 114, the fifth lens 115, the sixth lens 116, and the seventh lens 117 are all plastic lenses.

The image height half IMH of the lens assembly 11, the total track length TTL of the lens assembly 11, and the F-number F# of the lens assembly 11 meet: $2 \times IMH/(TTL \times F\#)=1.00$.

The first lens 111 has a positive focal power, at least the part that is of the image side surface of the first lens 111 and that corresponds to the optical axis is a concave surface, and the second lens 112 has a negative focal power.

The refractive index $nd1$ of the first lens 111 is 1.55, the refractive index $nd2$ of the second lens 112 is 1.67, and the refractive index $nd1$ of the first lens 111 and the refractive index $nd2$ of the second lens 112 meet: $nd2-nd1=0.12$.

The Abbe number $vd1$ of the first lens 111 is 55.92, the Abbe number $vd2$ of the second lens 112 is 20.37, and the Abbe number $vd1$ of the first lens 111 and the Abbe number $vd2$ of the second lens 112 meet: $vd1-vd2=35.55$.

The focal length $f1$ of the first lens 111 is 4.81 mm.

A focal length $f2$ of the second lens 112 is -11.60 mm.

The curvature radius $R2$ of the image side surface of the first lens 111 is 17.86 mm, the curvature radius $R3$ of the object side surface of the second lens 112 is 6.18 mm, and the curvature radius $R2$ of the image side surface of the first lens 111 and the curvature radius $R3$ of the object side surface of the second lens 112 meet: $R2/R3=2.89$.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius $R5$ of the object side surface of the third lens 113 is -39.13 mm.

The fourth lens 114 has a positive focal power, and at least the part that is of the image side surface of the fourth lens 114 and that corresponds to the optical axis is a convex surface.

The focal length $f3$ of the third lens 113 is -8674.79 mm, the focal length $f4$ of the fourth lens 114 is 31.98 mm, and the focal length $f3$ of the third lens 113 and the focal length $f4$ of the fourth lens 114 meet: $|f3/f4|=271.24$.

The total focal length f of the lens assembly 11 is 5.35, and the focal length $f4$ of the fourth lens 114 and the total focal length f of the lens assembly 11 meet: $f4/f=5.98$.

A refractive index $nd4$ of the fourth lens 114 is 1.55.

The Abbe number $vd2$ of the second lens 112 is 20.37, the Abbe number $vd3$ of the third lens 113 is 19.24, the Abbe number $vd4$ of the fourth lens 114 is 55.92, and the Abbe number $vd2$ of the second lens 112, the Abbe number $vd3$ of the third lens 113, and the Abbe number $vd4$ of the fourth lens 114 meet: $vd2+vd3+vd4=95.53$.

The distance $d45$ from the image side surface of the fourth lens 114 to the object side surface of the fifth lens 115 in the optical axis direction is 0.56, the total track length TTL of the lens assembly 11 is 6.20, and the distance $d45$ from the image side surface of the fourth lens 114 to the object side surface of the fifth lens 115 in the optical axis direction meets: $d45/TTL=0.09$.

The Abbe number $vd3$ of the third lens 113 is 19.24, the Abbe number $vd5$ of the fifth lens 115 is 37.40, and the Abbe number $vd3$ of the third lens 113 and the Abbe number $vd5$ of the fifth lens 115 meet: $vd3/vd5=0.51$.

The focal length $fi$ of each lens and the total focal length of the lens assembly 11 meet: $\Sigma|f/fi|=4.05$, and $i=1...6$.

The seventh lens 117 has a negative focal power, at least the part that is of the object side surface of the seventh lens 117 and that corresponds to the optical axis is a concave surface, and at least the part that is of the image side surface of the seventh lens 117 and that corresponds to the optical axis is a concave surface.

A curvature radius $R13$ of the object side surface of the seventh lens 117 is -7.44 mm, and a curvature radius $R14$ of the image side surface of the seventh lens 117 is 2.69 mm. The total focal length f of the lens assembly 11 is 5.35, and the curvature radius $R13$ of the object side surface of the seventh lens 117 and the total focal length f of the lens assembly 11 meet: $|R13/f|=1.39$.

The focal length $f1$ of the first lens 111 is 4.81 mm, the focal length $f6$ of the sixth lens 116 is 7.04 mm, the focal length $f7$ of the seventh lens 117 is -3.63 mm, and the focal length $f1$ of the first lens 111, the focal length $f6$ of the sixth lens 116, and the focal length $f7$ of the seventh lens 117 meet: $f1/(f6+f7)=1.41$.

**Table 13 below shows optical parameters of optical elements in a camera module according to Embodiment 5 of this application.**

|  | R |  | d |  | nd |  | vd |  |
|---|---|---|---|---|---|---|---|---|
| S1 | R0 | ∞ | d0 | -0.62 |  |  |  |  |
| L1 | R1 | 2.22 | d1 | 0.86 | nd1 | 1.546 | vd1 | 55.92 |
|  | R2 | 17.99 | d2 | 0.13 |  |  |  |  |
| L2 | R3 | 5.92 | d3 | 0.25 | nd2 | 1.667 | vd2 | 20.37 |
|  | R4 | 2.91 | d4 | 0.37 |  |  |  |  |
| L3 | R5 | -40.83 | d5 | 0.27 | nd3 | 1.677 | vd3 | 19.24 |
|  | R6 | -23.79 | d6 | 0.12 |  |  |  |  |
| L4 | R7 | -49.94 | d7 | 0.43 | nd4 | 1.546 | vd4 | 55.92 |
|  | R8 | -8.32 | d8 | 0.56 |  |  |  |  |
| L5 | R9 | -4.03 | d9 | 0.40 | nd5 | 1.570 | vd5 | 37.40 |
|  | R10 | -5.48 | d10 | 0.38 |  |  |  |  |
| L6 | R11 | -11.40 | d11 | 0.46 | nd6 | 1.546 | vd6 | 55.92 |
|  | R12 | -10.52 | d12 | 0.81 |  |  |  |  |
| L7 | R13 | -12.74 | d13 | 0.40 | nd7 | 1.537 | vd7 | 55.71 |
|  | R14 | -11.77 | d14 | 0.26 |  |  |  |  |
| IR | R15 | ∞ | d15 | 0.21 | ndg | 1.518 | vdg | 64.17 |
|  | R16 | ∞ | d16 | 0.30 |  |  |  |  |

L1 is the first lens 111, L2 is the second lens 112, L3 is the third lens 113, L4 is the fourth lens 114, L5 is the fifth lens 115, L6 is the sixth lens 116, L7 is the seventh lens 117, S1 is the aperture stop 118, and IR is the light filter 12.

R is a curvature radius of an optical element (for example, a lens or a light filter) at a position corresponding to the optical axis. R0 is a curvature radius of the aperture stop 118, R1 and R2 are curvature radiuses of the first lens 111 on the object side surface and the image side surface respectively, R3 and R4 are curvature radiuses of the second lens 112 on the object side surface and the image side surface respectively, R5 and R6 are curvature radiuses of the third lens 113 on the object side surface and the image side surface respectively, R7 and R8 are curvature radiuses of the fourth lens 114 on the object side surface and the image side surface respectively, R9 and R10 are curvature radiuses of the fifth lens 115 on the object side surface and the image side surface respectively, R11 and R12 are curvature radiuses of the sixth lens 116 on the object side surface and the image side surface respectively, R13 and R14 are curvature radiuses of the seventh lens 117 on the object side surface and the image side surface respectively, and R15 and R16 are curvature radiuses of the light filter 12 on the object side surface and the image side surface respectively.

d is a thickness of an optical element along the optical axis direction or a thickness of an air gap between optical elements. d0 is a distance from the aperture stop 118 to the object side surface of the first lens 111 along the optical axis direction, d1 is a thickness of the first lens 111 along the optical axis direction, d2 is a distance from the image side surface of the first lens 111 to the object side surface of the second lens 112 along the optical axis direction, d3 is a thickness of the second lens 112 along the optical axis direction, d4 is a distance from the image side surface of the second lens 112 to the object side surface of the third lens 113 along the optical axis direction, d5 is a thickness of the third lens 113 along the optical axis direction, d6 is a distance from the image side surface of the third lens 113 to the object side surface of the fourth lens 114 along the optical axis direction, d7 is a thickness of the fourth lens 114 along the optical axis direction, d8 is a distance from the image side surface of the fourth lens 114 to the object side surface of the fifth lens 115 along the optical axis direction, d9 is a thickness of the fifth lens 115 along the optical axis direction, d10 is a distance from the image side surface of the fifth lens 115 to the object side surface of the sixth lens 116 along the optical axis direction, d11 is a thickness of the sixth lens 116 along the optical axis direction, d12 is a distance from the image side surface of the sixth lens 116 to the object side surface of the seventh lens 117 along the optical axis direction, d13 is a thickness of the seventh lens 117 along the optical axis direction, d14 is a distance from the image side surface of the seventh lens 117 to the object side surface of the light filter 12 along the optical axis direction, d15 is a thickness of the light filter along the optical axis direction, and d16 is a distance from the image side surface of the light filter 12 to the photosensitive surface of the image sensor 13 along the optical axis direction.

nd is a refractive index of a d-line irradiating each optical element, where the d-line may be green light with a wavelength of 550 nm. nd1 is a d-line refractive index of the first lens 111, nd2 is a d-line refractive index of the second lens 112, nd3 is a d-line refractive index of the third lens 113, nd4 is a d-line refractive index of the fourth lens 114, nd5 is a d-line refractive index of the fifth lens 115, nd6 is a d-line refractive index of the sixth lens 116, nd7 is a d-line refractive index of the seventh lens 117, and ndg is a d-line refractive index of the light filter 12.

vd is an Abbe number of an optical element. vd1 is the Abbe number of the first lens 111, vd2 is the Abbe number of the second lens 112, vd3 is the Abbe number of the third lens 113, vd4 is the Abbe number of the fourth lens 114, vd5 is the Abbe number of the fifth lens 115, vd6 is an Abbe number of the sixth lens 116, vd7 is an Abbe number of the seventh lens 117, and vdg is an Abbe number of the light filter 12.

**Table 14 below shows aspheric coefficients of lenses in a lens assembly according to Embodiment 5 of this application.**

| | | Conic coefficient k | A4 | A6 | A8 | A10 |
|---|---|---|---|---|---|---|
| L1 | R1 | 0.00E+00 | 1.06E-01 | -4.03E-02 | 1.46E-02 | -3.84E-03 |
| | R2 | 0.00E+00 | 8.38E-02 | -1.91E-02 | 9.59E-03 | -2.13E-03 |
| L2 | R3 | 0.00E+00 | -1.57E-01 | 3.34E-02 | -2.95E-03 | 1.07E-03 |
| | R4 | 0.00E+00 | -1.71E-01 | 4.26E-02 | -1.50E-02 | 7.52E-03 |
| L3 | R5 | 0.00E+00 | 8.04E-02 | 5.72E-03 | -6.20E-03 | 3.56E-03 |
| | R6 | 0.00E+00 | 6.60E-02 | 3.29E-02 | -1.34E-02 | 5.41E-03 |
| L4 | R7 | 0.00E+00 | -8.74E-02 | 2.96E-02 | 2.53E-02 | -6.52E-03 |
| | R8 | 0.00E+00 | -3.15E-02 | 4.58E-02 | 3.05E-02 | -2.04E-02 |
| L5 | R9 | 0.00E+00 | 5.12E-01 | 2.31E-01 | -1.94E-01 | 7.75E-02 |
| | R10 | 0.00E+00 | -1.16E-01 | 3.16E-01 | 3.48E-02 | -3.81E-02 |
| L6 | R11 | 0.00E+00 | -3.68E-01 | 6.14E-01 | 5.23E-01 | 4.79E-02 |
| | R12 | 0.00E+00 | 6.83E-01 | 6.18E-01 | 4.25E-02 | -7.15E-02 |
| L7 | R13 | 0.00E+00 | -1.35E+00 | -2.68E-01 | -1.14E-02 | 4.20E-02 |
| | R14 | 0.00E+00 | -2.46E-01 | 6.80E-01 | 2.41E-01 | 2.25E-02 |
| | | A12 | A14 | A16 | A18 | A20 |
| L1 | R1 | 9.97E-04 | -2.96E-04 | 2.80E-04 | -1.56E-04 | 1.17E-04 |
| | R2 | 1.44E-03 | -5.53E-04 | 2.34E-04 | -9.20E-05 | 1.90E-05 |
| L2 | R3 | 1.34E-03 | -6.18E-04 | 3.71E-04 | -1.96E-04 | 7.10E-05 |
| | R4 | -2. 84E-03 | 1.24E-03 | -4.78E-04 | 1.79E-04 | -6.70E-05 |
| L3 | R5 | -1.40E-03 | 5.08E-04 | -1.17E-04 | -1.30E-05 | 1.90E-05 |
| | R6 | -2.10E-03 | 9.02E-04 | 9.40E-05 | -3.03E-04 | 2.11E-04 |
| L4 | R7 | -2.33E-03 | 7.12E-04 | 9.60E-04 | -1.20E-04 | -2.01E-04 |
| | R8 | 3.72E-03 | 2.80E-03 | -1.92E-03 | 7.57E-04 | -2.00E-06 |
| L5 | R9 | 3.53E-03 | -1.39E-02 | 1.07E-02 | -3.59E-03 | -1.40E-04 |
| | R10 | 4.31E-03 | 3.86E-02 | -6.02E-03 | -7.57E-03 | 4.47E-03 |
| L6 | R11 | -1.71E-01 | -4.02E-02 | 5.74E-02 | 2.30E-02 | -1.44E-02 |
| | R12 | -6.78E-02 | 4.42E-02 | -1.87E-02 | -1.85E-02 | 5.55E-03 |
| L7 | R13 | 6.99E-03 | 1.56E-02 | 5.91E-02 | 3.63E-02 | 2.37E-02 |
| | R14 | 2.32E-02 | 4.48E-02 | 2.53E-02 | 4.67E-02 | 2.10E-02 |

(continued)

| | | | A22 | A24 | A26 | A28 | A30 |
|---|---|---|---|---|---|---|---|
| L1 | R1 | -3.10E-07 | 0.00E+00 | 0.00E+00 | 0.00E+00 | 0.00E+00 |
| | R2 | 0.00E+00 | 0.00E+00 | 0.00E+00 | 0.00E+00 | 0.00E+00 |
| L2 | R3 | -1.80E-05 | 0.00E+00 | 0.00E+00 | 0.00E+00 | 0.00E+00 |
| | R4 | -9.41E-08 | 0.00E+00 | 0.00E+00 | 0.00E+00 | 0.00E+00 |
| L3 | R5 | -1.80E-05 | 0.00E+00 | 0.00E+00 | 0.00E+00 | 0.00E+00 |
| | R6 | -1.16E-04 | -2.50E-05 | 1.00E-05 | -2.80E-05 | 0.00E+00 |
| L4 | R7 | 5.20E-05 | -5.00E-05 | -2.80E-05 | 0.00E+00 | 0.00E+00 |
| | R8 | -1.56E-04 | -1.00E-05 | -4.00E-06 | 0.00E+00 | 0.00E+00 |
| L5 | R9 | 1.25E-03 | -8.94E-04 | -5.40E-05 | -9.80E-05 | -1.38E-04 |
| | R10 | 8.84E-04 | -9.66E-04 | -1.01E-04 | -4.30E-05 | -1.55E-04 |
| L6 | R11 | -1.26E-02 | -3.18E-04 | 2.07E-03 | -7.32E-04 | -7.59E-04 |
| | R12 | -9.42E-03 | -4.16E-03 | -1.87E-03 | -2.34E-03 | -5.41E-04 |
| L7 | R13 | 3.42E-03 | -3.02E-03 | -1.56E-03 | -2.30E-03 | -7.64E-04 |
| | R14 | 1.80E-03 | -6.90E-03 | -5.87E-03 | 7.99E-03 | 3.47E-03 |

It can be learned from Table 14 that, all lenses in the lens assembly 11 are aspheric lenses, that is, the lens assembly 11 includes 14 aspheric surfaces. An aspheric surface type z of each lens in the lens assembly 11 may be calculated by using the following aspheric surface formula:

$$z = \frac{c^2 r^2}{1 + \sqrt{1 - (1+k)c^2 r^2}} + \frac{u^2 (1 - u^2)\sqrt{1 - kc^2 r^2}}{\sqrt{1 - (k+1)c^2 r^2}} \sum A_i Q_i (u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 19.

For optical parameters of the lens assembly 11 including the foregoing lenses, refer to the following Table 15.

**Table 15 shows optical parameters of a lens assembly according to Embodiment 5 of this application.**

| Focal length f | 5.35 mm |
|---|---|
| Value of F-number | 1.72 |
| Image height half IMH | 5.30 mm |
| 2×IMH/TTL/F# | 1.00 |
| Wavelength | 650 nm, 610 nm, 555 nm, 510 nm, 470 nm |

It can be learned from Table 15 that, the lens assembly 11 provided in Embodiment 5 of this application has both features of a large aperture and a large optical format, and has a small total track length.

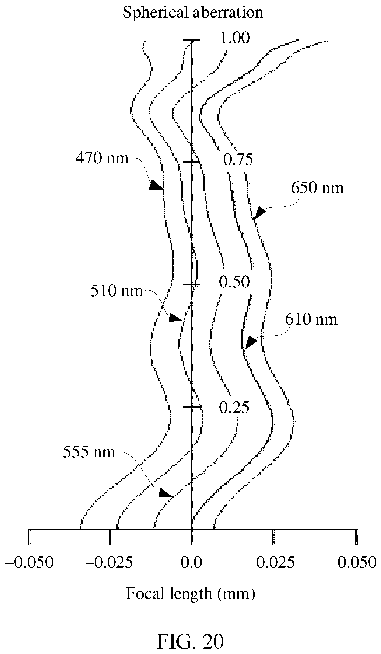

FIG. 20 is an axial chromatic aberration curve diagram of a lens assembly according to Embodiment 5 of this application. An example axial chromatic aberration in FIG. 20 is an axial chromatic aberration of light with wavelengths of 650 nm, 610 nm, 555 nm, 510 nm, and 470 nm after the light passes through the lens assembly 11. A horizontal coordinate represents a size of a spherical aberration, and a vertical coordinate represents a normalized aperture. It can be learned from FIG. 20 that the axial chromatic aberration of the light after the light passes through the lens assembly 11 is small.

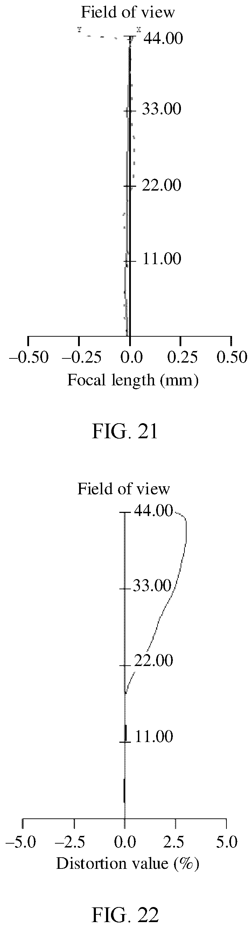

FIG. 21 is a diagram of astigmatic and field curves of a lens assembly according to Embodiment 5 of this application. FIG. 21 shows a diagram of astigmatic and field curves of light with a wavelength of 555 nm after the light passes through the lens assembly 11. S is a field curve in a sagittal direction, T is a field curve in a meridian direction, a horizontal coordinate represents a size of the field curve, a horizontal distance between T and S represents a size of astigmatism, and a vertical coordinate represents a field of view. It can be learned from FIG. 21 that, the lens assembly 11 has small field curves in both the sagittal direction and the meridian direction, and has high imaging quality.

FIG. 22 is a distortion curve diagram of a lens assembly according to Embodiment 5 of this application. FIG. 22 shows a distortion curve of light with a wavelength of 555 nm after the light passes through the lens assembly 11. A horizontal coordinate is a distortion size, and a vertical coordinate is a field of view. It can be learned from FIG. 22 that, distortion of imaging performed by the lens assembly 11 is small, and a difference between an imaging shape and an ideal shape is small, so that a deformation difference requirement is met and high imaging quality is achieved.

**Embodiment 6**

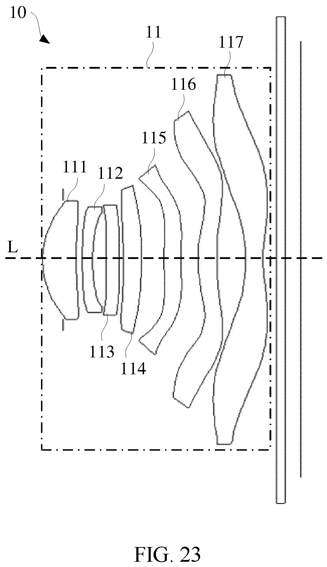

FIG. 23 is a schematic diagram of a simulation structure of a camera module according to Embodiment 6 of this application.

In this embodiment of this application, with reference to FIG. 23, the quantity N of the lenses included in the lens assembly 11 is 7. From the object side to the image side along the optical axis L, the first lens 111, the second lens 112, the third lens 113, the fourth lens 114, the fifth lens 115, the sixth lens 116, and the seventh lens 117 are sequentially included. The first lens 111, the second lens 112, the third lens 113, the fourth lens 114, the fifth lens 115, the sixth lens 116, and the seventh lens 117 are all plastic lenses.

The image height half IMH of the lens assembly 11, the total track length TTL of the lens assembly 11, and the F-number F# of the lens assembly 11 meet: $2\times$IMH/(TTL$\times$F#)=0.90.

The first lens 111 has a positive focal power, at least the part that is of the image side surface of the first lens 111 and that corresponds to the optical axis is a concave surface, and the second lens 112 has a negative focal power.

The refractive index nd1 of the first lens 111 is 1.55, the refractive index nd2 of the second lens 112 is 1.68, and the refractive index nd1 of the first lens 111 and the refractive index nd2 of the second lens 112 meet: nd2-nd1=0.13.

The Abbe number vd1 of the first lens 111 is 55.92, the Abbe number vd2 of the second lens 112 is 19.24, and the Abbe number vd1 of the first lens 111 and the Abbe number vd2 of the second lens 112 meet: vd1-vd2=36.69.

The focal length f1 of the first lens 111 is 4.59 mm.

A focal length f2 of the second lens 112 is -11.21 mm.

The curvature radius R2 of the image side surface of the first lens 111 is 16.89 mm, the curvature radius R3 of the object side surface of the second lens 112 is 6.46 mm, and the curvature radius R2 of the image side surface of the first lens 111 and the curvature radius R3 of the object side surface of the second lens 112 meet: R2/R3=2.61.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius R5 of the object side surface of the third lens 113 is -19.68 mm.

The fourth lens 114 has a positive focal power, and at least the part that is of the image side surface of the fourth lens 114 and that corresponds to the optical axis is a convex surface.

The focal length f3 of the third lens 113 is -132.48 mm, the focal length f4 of the fourth lens 114 is 30.46 mm, and the focal length f3 of the third lens 113 and the focal length f4 of the fourth lens 114 meet: |f3/f4|=4.35.

The total focal length f of the lens assembly 11 is 5.30, and the focal length f4 of the fourth lens 114 and the total focal length f of the lens assembly 11 meet: f4/f=5.75.

A refractive index nd4 of the fourth lens 114 is 1.55.

The Abbe number vd2 of the second lens 112 is 19.21, the Abbe number vd3 of the third lens 113 is 19.24, the Abbe number vd4 of the fourth lens 114 is 55.92, and the Abbe number vd2 of the second lens 112, the Abbe number vd3 of the third lens 113, and the Abbe number vd4 of the fourth lens 114 meet: vd2+vd3+vd4=94.40.

The distance d45 from the image side surface of the fourth lens 114 to the object side surface of the fifth lens 115 in the optical axis direction is 0.53, the total track length TTL of the lens assembly 11 is 6.10, and the distance d45 from the image side surface of the fourth lens 114 to the object side surface of the fifth lens 115 in the optical axis direction meets: d45/TTL=0.09.

The Abbe number vd3 of the third lens 113 is 19.24, the Abbe number vd5 of the fifth lens 115 is 37.40, and the Abbe number vd3 of the third lens 113 and the Abbe number vd5 of the fifth lens 115 meet: vd3/vd5=0.51.

The focal length fi of each lens and the total focal length of the lens assembly 11 meet: $\Sigma$|f/fi|=4.07, and i=1...6.

The seventh lens 117 has a negative focal power, at least the part that is of the object side surface of the seventh lens 117 and that corresponds to the optical axis is a concave surface, and at least the part that is of the image side surface of the seventh lens 117 and that corresponds to the optical axis is a concave surface.

A curvature radius R13 of the object side surface of the seventh lens 117 is -6.94 mm, and a curvature radius R14 of the image side surface of the seventh lens 117 is 2.81 mm. The total focal length f of the lens assembly 11 is 5.30, and the curvature radius R13 of the object side surface of the seventh lens 117 and the total focal length f of the lens assembly 11 meet: |R13/f|=1.31.

The focal length f1 of the first lens 111 is 4.59 mm, the focal length f6 of the sixth lens 116 is 6.92 mm, the focal length f7 of the seventh lens 117 is -3.67 mm, and the focal length f1 of the first lens 111, the focal length f6 of the sixth lens 116, and the focal length f7 of the seventh lens 117 meet: f1/(f6+f7)=1.41.

**Table 16 below shows optical parameters of optical elements in a camera module according to Embodiment 6 of this application.**

|  | R |  | d |  | nd |  | vd |  |
|---|---|---|---|---|---|---|---|---|
| S1 | R0 | ∞ | d0 | -0.49 |  |  |  |  |
| L1 | R1 | 2.09 | d1 | 0.79 | nd1 | 1.547 | vd1 | 55.90 |
|  | R2 | 16.54 | d2 | 0.15 |  |  |  |  |
| L2 | R3 | 6.28 | d3 | 0.24 | nd2 | 1.677 | vd2 | 19.22 |
|  | R4 | 3.05 | d4 | 0.32 |  |  |  |  |
| L3 | R5 | -18.96 | d5 | 0.30 | nd3 | 1.677 | vd3 | 19.22 |
|  | R6 | -14.68 | d6 | 0.10 |  |  |  |  |
| L4 | R7 | -39.83 | d7 | 0.44 | nd4 | 1.546 | vd4 | 55.92 |
|  | R8 | -7.21 | d8 | 0.53 |  |  |  |  |
| L5 | R9 | -3.42 | d9 | 0.40 | nd5 | 1.570 | vd5 | 37.40 |
|  | R10 | -4.54 | d10 | 0.40 |  |  |  |  |
| L6 | R11 | -9.81 | d11 | 0.45 | nd6 | 1.546 | vd6 | 55.92 |
|  | R12 | -9.82 | d12 | 0.68 |  |  |  |  |
| L7 | R13 | -13.97 | d13 | 0.42 | nd7 | 1.537 | vd7 | 55.71 |
|  | R14 | -13.25 | d14 | 0.32 |  |  |  |  |
| IR | R15 | ∞ | d15 | 0.21 | ndg | 1.518 | vdg | 64.17 |
|  | R16 | ∞ | d16 | 0.36 |  |  |  |  |

L1 is the first lens 111, L2 is the second lens 112, L3 is the third lens 113, L4 is the fourth lens 114, L5 is the fifth lens 115, L6 is the sixth lens 116, L7 is the seventh lens 117, S1 is the aperture stop 118, and IR is the light filter 12.

R is a curvature radius of an optical element (for example, a lens or a light filter) at a position corresponding to the optical axis. For specific meanings of R0, R1, ..., and R16, refer to Embodiment 5. Details are not described again in this embodiment of this application.

d is a thickness of an optical element along the optical axis direction or a thickness of an air gap between optical elements. For specific meanings of d0, d1, ..., and d16, refer to Embodiment 5. Details are not described again in this embodiment of this application.

nd is a refractive index of a d-line irradiating each optical element. For specific meanings of nd1, nd2, ..., and ndg, refer to Embodiment 5. Details are not described again in this embodiment of this application.

vd is an Abbe number of an optical element. For specific meanings of vd1, vd2, ..., and vdg, refer to Embodiment 5. Details are not described again in this embodiment of this application.

**Table 17 below shows aspheric coefficients of lenses in a lens assembly according to Embodiment 6 of this application.**

|  |  | Conic coefficient k | A4 | A6 | A8 | A10 |
|---|---|---|---|---|---|---|
| L1 | R1 | 0.00E+00 | 7.97E-02 | -2. 84E-02 | 9.60E-03 | -2.45E-03 |
|  | R2 | 0.00E+00 | 6.94E-02 | -1.20E-02 | 5.08E-03 | -9.69E-04 |
| L2 | R3 | 0.00E+00 | -1.45E-01 | 2.97E-02 | -4.80E-03 | 1.57E-03 |
|  | R4 | 0.00E+00 | -1.43E-01 | 3.36E-02 | -1.23E-02 | 5.93E-03 |

(continued)

|  |  | Conic coefficient k | A4 | A6 | A8 | A10 |
|---|---|---|---|---|---|---|
| L3 | R5 | 0.00E+00 | 6.72E-02 | 9.00E-03 | -7.91E-03 | 4.12E-03 |
|  | R6 | 0.00E+00 | 5.49E-02 | 3.47E-02 | -1.30E-02 | 5.86E-03 |
| L4 | R7 | 0.00E+00 | -7.99E-02 | -8.93E-03 | 4.32E-02 | 4.01E-03 |
|  | R8 | 0.00E+00 | -7.76E-03 | 1.95E-02 | 4.04E-02 | -1.74E-02 |
| L5 | R9 | 0.00E+00 | 2.62E-01 | 3.42E-01 | -2.05E-01 | 5.53E-02 |
|  | R10 | 0.00E+00 | -2.45E-01 | 3.47E-01 | 4.54E-02 | -3.06E-02 |
| L6 | R11 | 0.00E+00 | -5.15E-01 | 5.25E-01 | 5.05E-01 | 9.96E-02 |
|  | R12 | 0.00E+00 | 2.22E-01 | 6.14E-01 | 6.18E-02 | -4.42E-02 |
| L7 | R13 | 0.00E+00 | -1.24E+00 | -3.55E-01 | -3.24E-03 | 1.27E-02 |
|  | R14 | 0.00E+00 | -1.68E-01 | 3.65E-01 | 3.35E-01 | 1.44E-02 |
|  |  | A12 | A14 | A16 | A18 | A20 |
| L1 | R1 | 5.78E-04 | -1.79E-04 | 1.23E-04 | -7.40E-05 | 3.40E-05 |
|  | R2 | 5.23E-04 | -2.28E-04 | 1.01E-04 | -5.60E-05 | 2.10E-05 |
| L2 | R3 | 2.94E-04 | -1.12E-04 | 6.00E-06 | 3.20E-05 | -3.60E-05 |
|  | R4 | -2.32E-03 | 9.61E-04 | -3.77E-04 | 1.25E-04 | -3.10E-05 |
| L3 | R5 | -1.44E-03 | 3.60E-04 | 2.30E-05 | -7.60E-05 | 4.30E-05 |
|  | R6 | -2.57E-03 | 9.20E-04 | 1.43E-04 | -2.76E-04 | 1.87E-04 |
| L4 | R7 | -9.40E-03 | 3.50E-03 | -2. 84E-03 | 2.82E-03 | -1.00E-03 |
|  | R8 | 2.03E-04 | 5.23E-03 | -3.30E-03 | 1.19E-03 | 7.50E-05 |
| L5 | R9 | 2.57E-02 | -2.66E-02 | 1.31E-02 | -2.12E-03 | -2.20E-03 |
|  | R10 | -1.37E-02 | 3.92E-02 | -4.63E-03 | -1.20E-02 | 5.30E-03 |
| L6 | R11 | -1.44E-01 | -8.98E-02 | 3.86E-02 | 3.49E-02 | -1.43E-02 |
|  | R12 | -9.85E-02 | 7.40E-03 | 2.31E-02 | -4.05E-02 | 5.41E-03 |
| L7 | R13 | 4.94E-02 | -2.08E-02 | 4.58E-02 | 5.68E-02 | 2.02E-02 |
|  | R14 | 6.99E-02 | -2.69E-02 | 7.32E-02 | 1.83E-02 | 5.86E-03 |
|  |  | A22 | A24 | A26 | A28 | A30 |
| L1 | R1 | -1.01E-07 | 0.00E+00 | 0.00E+00 | 0.00E+00 | 0.00E+00 |
|  | R2 | 0.00E+00 | 0.00E+00 | 0.00E+00 | 0.00E+00 | 0.00E+00 |
| L2 | R3 | 1.40E-05 | 0.00E+00 | 0.00E+00 | 0.00E+00 | 0.00E+00 |
|  | R4 | 0.00E+00 | 0.00E+00 | 0.00E+00 | 0.00E+00 | 0.00E+00 |
| L3 | R5 | -5 . 00E-06 | 0.00E+00 | 0.00E+00 | 0.00E+00 | 0.00E+00 |
|  | R6 | -8.50E-05 | 4.00E-05 | -1.40E-05 | 4.00E-06 | 0.00E+00 |
| L4 | R7 | 3.34E-04 | -3.04E-04 | 1.73E-04 | 0.00E+00 | 0.00E+00 |
|  | R8 | -1.98E-04 | 6.50E-05 | -8.00E-06 | -7.50E-08 | 0.00E+00 |
| L5 | R9 | 1.88E-03 | -5.84E-04 | -4.22E-04 | 4.17E-04 | -2.15E-04 |
|  | R10 | 1.02E-03 | -1.02E-03 | -1.58E-03 | 1.60E-03 | -7.46E-04 |
| L6 | R11 | -1.19E-02 | 8.92E-04 | 1.59E-03 | -1.20E-03 | -1.04E-03 |
|  | R12 | 2.94E-03 | -1.27E-02 | 7.68E-03 | -6.19E-03 | 1.40E-05 |

(continued)

|  |  | A22 | A24 | A26 | A28 | A30 |
|---|---|---|---|---|---|---|
| L7 | R13 | 1.34E-02 | -3.54E-04 | -3.69E-03 | -3.57E-03 | -5.19E-04 |
|  | R14 | 4.01E-02 | -1.12E-02 | -4.10E-03 | 7.95E-03 | -2.38E-04 |

It can be learned from Table 17 that, all lenses in the lens assembly 11 are aspheric lenses, that is, the lens assembly 11 includes 14 aspheric surfaces. An aspheric surface type z of each lens in the lens assembly 11 may be calculated by using the following aspheric surface formula:

$$z = \frac{c^2 r^2}{1 + \sqrt{1 - (1 + k)c^2 r^2}} + \frac{u^2(1 - u^2)\sqrt{1 - kc^2 r^2}}{\sqrt{1 - (k + 1)c^2 r^2}} \sum A_i Q_i(u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 23.

For optical parameters of the lens assembly 11 including the foregoing lenses, refer to the following Table 18.

**Table 18 shows optical parameters of a lens assembly according to Embodiment 6 of this application.**

| Focal length f | 5.30 mm |
|---|---|
| Value of F-number | 1.89 |
| Image height half IMH | 5.19 mm |
| 2×IMH/TTL/F# | 0.9 |
| Wavelength | 650 nm, 610 nm, 555 nm, 510 nm, 470 nm |

It can be learned from Table 18 that, the lens assembly 11 provided in Embodiment 6 of this application has both features of a large aperture and a large optical format, and has a small total track length.

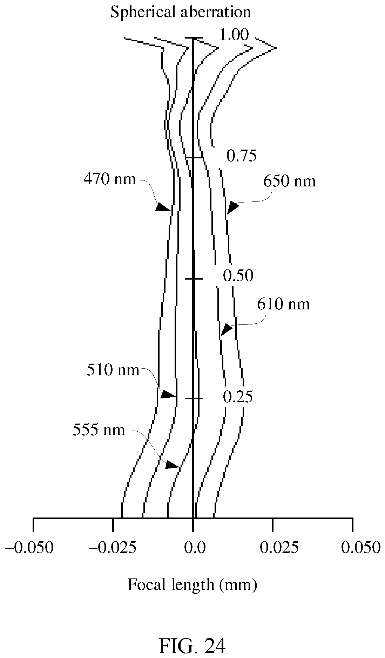

FIG. 24 is an axial chromatic aberration curve diagram of a lens assembly according to Embodiment 6 of this application. An example axial chromatic aberration in FIG. 24 is an axial chromatic aberration of light with wavelengths of 650 nm, 610 nm, 555 nm, 510 nm, and 470 nm after the light passes through the lens assembly 11. It can be learned from FIG. 24 that, the axial chromatic aberration of the light after the light passes through the lens assembly 11 is small.

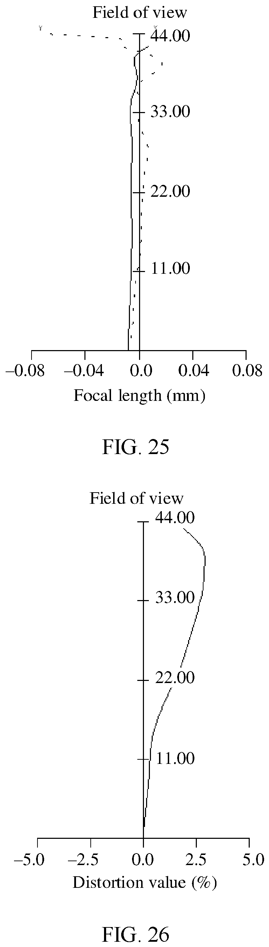

FIG. 25 is a diagram of astigmatic and field curves of a lens assembly according to Embodiment 6 of this application. FIG. 25 shows a diagram of astigmatic and field curves of light with a wavelength of 555 nm after the light passes through the lens assembly 11. It can be learned from FIG. 25 that, the lens assembly 11 has small field curves in both the sagittal direction and the meridian direction, and has high imaging quality.

FIG. 26 is a distortion curve diagram of a lens assembly according to Embodiment 6 of this application. FIG. 26 shows a distortion curve of light with a wavelength of 555 nm after the light passes through the lens assembly 11. It can be learned from FIG. 26 that, distortion of imaging performed by the lens assembly 11 is small, and a difference between an imaging shape and an ideal shape is small, so that a deformation difference requirement is met and high imaging quality is achieved.

**Embodiment 7**

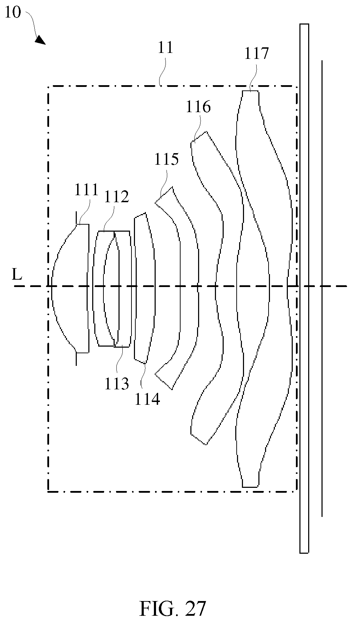

FIG. 27 is a schematic diagram of a simulation structure of a camera module according to Embodiment 7 of this application.

In this embodiment of this application, with reference to FIG. 27, the quantity N of the lenses included in the lens assembly 11 is 7. From the object side to the image side along the optical axis L, the first lens 111, the second lens 112, the third lens 113, the fourth lens 114, the fifth lens 115, the sixth lens 116, and the seventh lens 117 are sequentially included. The first lens 111, the second lens 112, the third lens 113, the fourth lens 114, the fifth lens 115, the sixth lens 116, and the seventh lens 117 are all plastic lenses.

The image height half IMH of the lens assembly 11, the total track length TTL of the lens assembly 11, and the F-number F# of the lens assembly 11 meet: 2×IMH/(TTL×F#)=0.94.

The first lens 111 has a positive focal power, at least the part that is of the image side surface of the first lens 111 and that corresponds to the optical axis is a concave surface, and the second lens 112 has a negative focal power.

The refractive index nd1 of the first lens 111 is 1.55, the refractive index nd2 of the second lens 112 is 1.69, and the refractive index nd1 of the first lens 111 and the refractive index nd2 of the second lens 112 meet: nd2-nd1=0.14.

The Abbe number vd1 of the first lens 111 is 65.10, the Abbe number vd2 of the second lens 112 is 31.22, and the Abbe number vd1 of the first lens 111 and the Abbe number vd2 of the second lens 112 meet: vd1-vd2=33.88.

The focal length f1 of the first lens 111 is 4.61 mm.

A focal length f2 of the second lens 112 is -10.51 mm.

The curvature radius R2 of the image side surface of the first lens 111 is 19.68 mm, the curvature radius R3 of the object side surface of the second lens 112 is 6.546 mm, and the curvature radius R2 of the image side surface of the first lens 111 and the curvature radius R3 of the object side surface of the second lens 112 meet: R2/R3=3.01.

The third lens 113 has a negative focal power, at least the part that is of the object side surface of the third lens 113 and that corresponds to the optical axis is a concave surface, and at least the part that is of the image side surface of the third lens 113 and that corresponds to the optical axis is a convex surface.

A curvature radius R5 of the object side surface of the third lens 113 is -26.91 mm.

The fourth lens 114 has a positive focal power, and at least the part that is of the image side surface of the fourth lens 114 and that corresponds to the optical axis is a convex surface.

The focal length f3 of the third lens 113 is -169.03 mm, the focal length f4 of the fourth lens 114 is 26.26 mm, and the focal length f3 of the third lens 113 and the focal length f4 of the fourth lens 114 meet: |f3/f4|=6.44.

The total focal length f of the lens assembly 11 is 5.32, and the focal length f4 of the fourth lens 114 and the total focal length f of the lens assembly 11 meet: f4/f=4.93.

A refractive index nd4 of the fourth lens 114 is 1.55.

The Abbe number vd2 of the second lens 112 is 31.22, the Abbe number vd3 of the third lens 113 is 31.90, the Abbe number vd4 of the fourth lens 114 is 55.92, and the Abbe number vd2 of the second lens 112, the Abbe number vd3 of the third lens 113, and the Abbe number vd4 of the fourth lens 114 meet: vd2+vd3+vd4=119.04.

The distance d45 from the image side surface of the fourth lens 114 to the object side surface of the fifth lens 115 in the optical axis direction is 0.56, the total track length TTL of the lens assembly 11 is 6.20, and the distance d45 from the image side surface of the fourth lens 114 to the object side surface of the fifth lens 115 in the optical axis direction meets: d45/TTL=0.09.

The Abbe number vd3 of the third lens 113 is 31.90, the Abbe number vd5 of the fifth lens 115 is 41.83, and the Abbe number vd3 of the third lens 113 and the Abbe number vd5 of the fifth lens 115 meet: vd3/vd5=0.76.

The focal length fi of each lens and the total focal length of the lens assembly 11 meet: $\Sigma|f/fi|$=4.11, and i=1...6.

The seventh lens 117 has a negative focal power, at least the part that is of the object side surface of the seventh lens 117 and that corresponds to the optical axis is a concave surface, and at least the part that is of the image side surface of the seventh lens 117 and that corresponds to the optical axis is a concave surface.

A curvature radius R13 of the object side surface of the seventh lens 117 is -7.50 mm, and a curvature radius R14 of the image side surface of the seventh lens 117 is 2.87 mm. The total focal length f of the lens assembly 11 is 5.32, and the curvature radius R13 of the object side surface of the seventh lens 117 and the total focal length f of the lens assembly 11 meet: |R13/f|=1.41.

The focal length f1 of the first lens 111 is 4.61 mm, the focal length f6 of the sixth lens 116 is 7.09 mm, the focal length f7 of the seventh lens 117 is -3.82 mm, and the focal length f1 of the first lens 111, the focal length f6 of the sixth lens 116, and the focal length f7 of the seventh lens 117 meet: f1/(f6+f7)=1.41.

**Table 19 below shows optical parameters of optical elements in a camera module according to Embodiment 7 of this application.**

|  | R |  | d |  | nd |  | vd |  |
|---|---|---|---|---|---|---|---|---|
| S1 | R0 | ∞ | d0 | -0.56 |  |  |  |  |
| L1 | R1 | 2.14 | d1 | 0.81 | nd1 | 1.546 | vd1 | 65.10 |
|  | R2 | 19.24 | d2 | 0.13 |  |  |  |  |
| L2 | R3 | 6.26 | d3 | 0.24 | nd2 | 1.687 | vd2 | 31.22 |
|  | R4 | 2.94 | d4 | 0.36 |  |  |  |  |
| L3 | R5 | -28.26 | d5 | 0.28 | nd3 | 1.677 | vd3 | 31.90 |
|  | R6 | -21.18 | d6 | 0.11 |  |  |  |  |

(continued)

|  | R | | d | | nd | | vd | |
|---|---|---|---|---|---|---|---|---|
| L4 | R7 | -34.99 | d7 | 0.44 | nd4 | 1.546 | vd4 | 55.92 |
| | R8 | -6.91 | d8 | 0.56 | | | | |
| L5 | R9 | -3.68 | d9 | 0.42 | nd5 | 1.580 | vd5 | 41.83 |
| | R10 | -4.92 | d10 | 0.39 | | | | |
| L6 | R11 | -10.33 | d11 | 0.48 | nd6 | 1.546 | vd6 | 55.92 |
| | R12 | -10.03 | d12 | 0.77 | | | | |
| L7 | R13 | -16.32 | d13 | 0.40 | nd7 | 1.537 | vd7 | 55.71 |
| | R14 | -16.08 | d14 | 0.28 | | | | |
| IR | R15 | ∞ | d15 | 0.21 | ndg | 1.518 | vdg | 64.17 |
| | R16 | ∞ | d16 | 0.32 | | | | |

L1 is the first lens 111, L2 is the second lens 112, L3 is the third lens 113, L4 is the fourth lens 114, L5 is the fifth lens 115, L6 is the sixth lens 116, L7 is the seventh lens 117, S1 is the aperture stop 118, and IR is the light filter 12.

R is a curvature radius of an optical element (for example, a lens or a light filter) at a position corresponding to the optical axis. For specific meanings of R0, R1, ..., and R16, refer to Embodiment 5. Details are not described again in this embodiment of this application.

d is a thickness of an optical element along the optical axis direction or a thickness of an air gap between optical elements. For specific meanings of d0, d1, ..., and d16, refer to Embodiment 5. Details are not described again in this embodiment of this application.

nd is a refractive index of a d-line irradiating each optical element. For specific meanings of nd1, nd2, ..., and ndg, refer to Embodiment 5. Details are not described again in this embodiment of this application.

vd is an Abbe number of an optical element. For specific meanings of vd1, vd2, ..., and vdg, refer to Embodiment 5. Details are not described again in this embodiment of this application.

**Table 20 below shows aspheric coefficients of lenses in a lens assembly according to Embodiment 7 of this application.**

| | | Conic coefficient k | A4 | A6 | A8 | A10 |
|---|---|---|---|---|---|---|
| L1 | R1 | 9.27E-02 | -3.55E-02 | 1.27E-02 | -3.30E-03 | 7.32E-04 |
| | R2 | 0.00E+00 | 7.33E-02 | -1.53E-02 | 7.35E-03 | -1.27E-03 |
| L2 | R3 | 0.00E+00 | -1.48E-01 | 3.15E-02 | -4.08E-03 | 1.61E-03 |
| | R4 | 0.00E+00 | -1.55E-01 | 3.76E-02 | -1.33E-02 | 6.48E-03 |
| L3 | R5 | 0.00E+00 | 7.51E-02 | 4.94E-03 | -5.16E-03 | 3.01E-03 |
| | R6 | 0.00E+00 | 6.47E-02 | 3.04E-02 | -1.21E-02 | 5.09E-03 |
| L4 | R7 | 0.00E+00 | -8.42E-02 | 2.15E-02 | 2.92E-02 | -6.96E-03 |
| | R8 | 0.00E+00 | -2.17E-02 | 4.21E-02 | 2.42E-02 | -1.79E-02 |
| L5 | R9 | 0.00E+00 | 4.54E-01 | 2.24E-01 | -1.74E-01 | 7.06E-02 |
| | R10 | 0.00E+00 | -1.26E-01 | 3.18E-01 | 3.65E-02 | -3.70E-02 |
| L6 | R11 | 0.00E+00 | -3.84E-01 | 5.87E-01 | 4.84E-01 | 4.75E-02 |
| | R12 | 0.00E+00 | 4.68E-01 | 6.08E-01 | 3.79E-02 | -5.33E-02 |
| L7 | R13 | 0.00E+00 | -1.43E+00 | -3 .26E-0 1 | -5.23E-03 | 1.74E-02 |
| | R14 | 0.00E+00 | -3.65E-01 | 4.79E-01 | 3.33E-01 | -4.08E-03 |
| | | A12 | A14 | A16 | A18 | A20 |
| L1 | R1 | -1.78E-04 | 1.39E-04 | -9.10E-05 | 5.70E-05 | -1.57E-07 |

(continued)

| | | A12 | A14 | A16 | A18 | A20 |
|---|---|---|---|---|---|---|
| | R2 | 9.64E-04 | -3.51E-04 | 1.61E-04 | -7.00E-05 | 2.10E-05 |
| L2 | R3 | 8.40E-04 | -3.02E-04 | 1.31E-04 | -2.80E-05 | -1.20E-05 |
| | R4 | -2.31E-03 | 9.59E-04 | -3.58E-04 | 1.19E-04 | -3.30E-05 |
| L3 | R5 | -1.07E-03 | 3.28E-04 | -7.00E-06 | -5.20E-05 | 6.20E-05 |
| | R6 | -1.77E-03 | 7.55E-04 | 2.10E-05 | -1.66E-04 | 1.72E-04 |
| L4 | R7 | -2.10E-03 | 9.53E-04 | 5.07E-04 | 1.87E-04 | -2.79E-04 |
| | R8 | 4.99E-03 | 1.77E-03 | -1.82E-03 | 8.89E-04 | 7.00E-06 |
| L5 | R9 | 1.27E-03 | -1.24E-02 | 1.13E-02 | -5.11E-03 | 2.97E-04 |
| | R10 | 9.58E-04 | 3.54E-02 | -5.93E-03 | -7.56E-03 | 3.39E-03 |
| L6 | R11 | -1.63E-01 | -4. 84E-02 | 5.72E-02 | 2.30E-02 | -1.56E-02 |
| | R12 | -8.71E-02 | 3.61E-02 | -3.45E-03 | -2.48E-02 | 9.62E-03 |
| L7 | R13 | 4.45E-02 | -1.70E-02 | 5.23E-02 | 5.37E-02 | 2.15E-02 |
| | R14 | 6.63E-02 | -1.19E-02 | 7.69E-02 | 2.03E-02 | 5.43E-03 |
| | | A22 | A24 | A26 | A28 | A30 |
| L1 | R1 | 0.00E+00 | 0.00E+00 | 0.00E+00 | 0.00E+00 | 0.00E+00 |
| | R2 | 0.00E+00 | 0.00E+00 | 0.00E+00 | 0.00E+00 | 0.00E+00 |
| L2 | R3 | 1.10E-05 | 0.00E+00 | 0.00E+00 | 0.00E+00 | 0.00E+00 |
| | R4 | 0.00E+00 | 0.00E+00 | 0.00E+00 | 0.00E+00 | 0.00E+00 |
| L3 | R5 | -1.60E-05 | 0.00E+00 | 0.00E+00 | 0.00E+00 | 0.00E+00 |
| | R6 | -7.30E-05 | -6.00E-06 | 1.00E-05 | -1.60E-05 | 0.00E+00 |
| L4 | R7 | 1.27E-04 | 2.40E-05 | -3.00E-05 | 0.00E+00 | 0.00E+00 |
| | R8 | -1.18E-04 | 1.90E-05 | 3.00E-06 | 0.00E+00 | 0.00E+00 |
| L5 | R9 | 1.57E-03 | -1.21E-03 | 2.25E-04 | 1.43E-04 | -1.10E-04 |
| | R10 | 1.28E-03 | -1.13E-03 | -3.26E-04 | 3.69E-04 | -4.90E-05 |
| L6 | R11 | -1.13E-02 | 8.50E-04 | 1.84E-03 | -3.83E-04 | -4.07E-04 |
| | R12 | -9.52E-03 | -1.74E-03 | -2.00E-04 | -2.49E-03 | 3.51E-04 |
| L7 | R13 | 1.17E-02 | -1.13E-03 | -3.33E-03 | -2.61E-03 | -3.12E-04 |
| | R14 | 4.00E-02 | -1.49E-02 | -2.27E-03 | 4.68E-03 | 6.92E-04 |

It can be learned from Table 20 that, all lenses in the lens assembly 11 are aspheric lenses, that is, the lens assembly 11 includes 14 aspheric surfaces. An aspheric surface type z of each lens in the lens assembly 11 may be calculated by using the following aspheric surface formula:

$$z \; = \; \frac{c^2 r^2}{1 \, + \, \sqrt{1 \, - \, (1 \, + \, k)c^2 r^2}} \; + \; \frac{u^2(1 \, - \, u^2)\sqrt{1 \, - \, kc^2 r^2}}{\sqrt{1 \, - \, (k \, + \, 1)c^2 r^2}} \, \sum A_i Q_i(u^2)$$

z is a sag of the aspheric surface, r is a radial coordinate of the aspheric surface, c is a spherical curvature of a vertex of the aspheric surface, k is a quadratic surface constant, A4, A6, A8, ..., and A30 are aspheric coefficients, and each lens may be simulated based on an obtained aspheric surface type and the like, to finally obtain the camera module 10 shown in FIG. 27.

For optical parameters of the lens assembly 11 including the foregoing lenses, refer to the following Table 21.

**Table 21 shows optical parameters of a lens assembly according to Embodiment 7 of this application.**

| Focal length f | 5.32 mm |
|---|---|
| Value of F-number | 1.80 |
| Image height half IMH | 5.25 mm |
| 2×IMH/TTL/F# | 0.94 |
| Wavelength | 650 nm, 610 nm, 555 nm, 510 nm, 470 nm |

It can be learned from Table 21 that, the lens assembly 11 provided in Embodiment 6 of this application has both features of a large aperture and a large optical format, and has a small total track length.

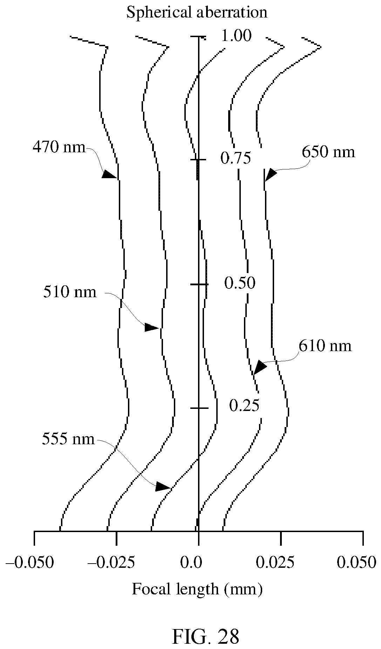

FIG. 28 is an axial chromatic aberration curve diagram of a lens assembly according to Embodiment 7 of this application. An example axial chromatic aberration in FIG. 28 is an axial chromatic aberration of light with wavelengths of 650 nm, 610 nm, 555 nm, 510 nm, and 470 nm after the light passes through the lens assembly 11. It can be learned from FIG. 28 that, the axial chromatic aberration of the light after the light passes through the lens assembly 11 is small.

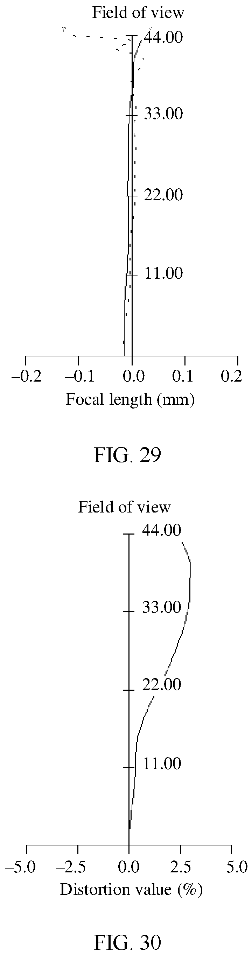

FIG. 29 is a diagram of astigmatic and field curves of a lens assembly according to Embodiment 7 of this application. FIG. 29 shows a diagram of astigmatic and field curves of light with a wavelength of 555 nm after the light passes through the lens assembly 11. It can be learned from FIG. 29 that, the lens assembly 11 has small field curves in both the sagittal direction and the meridian direction, and has high imaging quality.

FIG. 30 is a distortion curve diagram of a lens assembly according to Embodiment 7 of this application. FIG. 30 shows a distortion curve of light with a wavelength of 555 nm after the light passes through the lens assembly 11. It can be learned from FIG. 30 that, distortion of imaging performed by the lens assembly 11 is small, and a difference between an imaging shape and an ideal shape is small, so that a deformation difference requirement is met and high imaging quality is achieved.

Finally, it should be noted that the foregoing embodiments are merely intended for describing the technical solutions in embodiments of this application other than limiting this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, and the modifications or replacements do not make essence of the corresponding technical solutions depart from the scope of the technical solutions of embodiments of this application.

**Claims**

1.  A lens assembly, comprising a plurality of lenses, wherein the plurality of lenses comprise at least a first lens, a second lens, a third lens, a fourth lens, a fifth lens, and a sixth lens that are sequentially arranged from an object side to an image side along an optical axis;

    the lens assembly meets a conditional expression: $0.85 \leq 2 \times IMH/(TTL \times F\#) \leq 1.5$, wherein IMH is an image height half of the lens assembly, F# is an F-number of the lens assembly, and TTL is a total track length of the lens assembly;
    a refractive index nd1 of the first lens and a refractive index nd2 of the second lens meet a conditional expression: $0.1 < nd2-nd1 < 0.15$, and an Abbe number vd1 of the first lens and an Abbe number vd2 of the second lens meet a conditional expression: $0 < vd1-vd2 < 40$; and
    a focal length f3 of the third lens and a focal length f4 of the fourth lens meet a conditional expression: $|f3/f4| > 2.5$.

2.  The lens assembly according to claim 1, wherein a distance d45 from an image side surface of the fourth lens to an object side surface of the fifth lens in the optical axis direction meets a conditional expression: $0.03 < d45/TTL < 0.25$.

3.  The lens assembly according to claim 1 or 2, wherein an Abbe number vd3 of the third lens and an Abbe number vd5 of the fifth lens meet a conditional expression: $vd3/vd5 < 1$.

4.  The lens assembly according to any one of claims 1 to 3, wherein the Abbe number vd2 of the second lens, vd3 of the third lens, and an Abbe number vd4 of the fourth lens meet a conditional expression: $vd2+vd3+vd4 > 92$.

5.  The lens assembly according to any one of claims 1 to 4, wherein a refractive index nd4 of the fourth lens is less than 1.69.

6. The lens assembly according to any one of claims 1 to 5, wherein at least the first lens, the second lens, the third lens, the fourth lens, and the fifth lens are plastic lenses.

7. The lens assembly according to any one of claims 1 to 6, wherein the first lens has a positive focal power, and the second lens has a negative focal power.

8. The lens assembly according to claim 7, wherein at least a part that is of an image side surface of the first lens and that corresponds to the optical axis is a concave surface.

9. The lens assembly according to claim 7 or 8, wherein the third lens has a negative focal power, and the fourth lens has a positive focal power.

10. The lens assembly according to claim 9, wherein at least a part that is of an object side surface of the third lens and that corresponds to the optical axis is a concave surface, and at least a part that is of an image side surface of the third lens and that corresponds to the optical axis is a convex surface.

11. The lens assembly according to claim 9 or 10, wherein at least a part that is of the image side surface of the fourth lens and that corresponds to the optical axis is a convex surface.

12. The lens assembly according to any one of claims 1 to 11, wherein a curvature radius R2 of the image side surface of the first lens and a curvature radius R3 of an object side surface of the second lens meet a conditional expression: R2/R3>1.4.

13. The lens assembly according to any one of claims 1 to 12, wherein the focal length f4 of the fourth lens and a total focal length f of the lens assembly meet a conditional expression: $0 \leq f4/f \leq 10$.

14. The lens assembly according to any one of claims 1 to 13, wherein a quantity N of the lenses meets a conditional expression: $6 \leq N \leq 10$.

15. The lens assembly according to claim 14, wherein a focal length fi of each lens and the total focal length f of the lens assembly meet a conditional expression: $\Sigma_{i=1...N}$ |f/fi|>3, wherein fi is a focal length of an $i^{th}$ lens, and i=1...N.

16. The lens assembly according to any one of claims 1 to 15, wherein the plurality of lenses further comprise a seventh lens, the seventh lens is located on a side that is of the sixth lens and that faces the image side, and the seventh lens has a negative focal power.

17. The lens assembly according to claim 16, wherein at least a part that is of an object side surface of the seventh lens and that corresponds to the optical axis is a concave surface, and at least a part that is of an image side surface of the seventh lens and that corresponds to the optical axis is a concave surface.

18. The lens assembly according to claim 16 or 17, wherein a curvature radius R13 of the object side surface of the seventh lens and the total focal length f of the lens assembly meet a conditional expression: $0 \leq |R13/f| \leq 1.8$.

19. The lens assembly according to any one of claims 16 to 18, wherein a focal length f1 of the first lens, a focal length f6 of the sixth lens, and a focal length f7 of the seventh lens meet a conditional expression: f1/(f6+f7)>1.4.

20. A camera module, comprising at least an image sensor and the lens assembly according to any one of claims 1 to 19, wherein the image sensor is located on a side that is of the lens assembly and that faces the image side.

21. An electronic device, comprising at least a housing and the camera module according to claim 20, wherein the camera module is disposed on the housing.

100

20

10

FIG. 1

10

12

13

116

115

114

111 112

Object side

L    o

Image side

118    113

TTL

FIG. 2

FIG. 3

FIG. 4

Field of view

43.78

32.84

21.89

10.95

−5.0  −2.5  0.0  2.5  5.0

Focal length (mm)

FIG. 5

Field of view

43.78

32.84

21.89

10.95

−5.0  −2.5  0.0  2.5  5.0

Distortion value (%)

FIG. 6

FIG. 7

FIG. 8

Field of view

43.78

32.84

21.89

10.95

−0.8   −0.4   0.0   0.4   0.8

Focal length (mm)

FIG. 9

Field of view

43.78

32.84

21.89

10.95

−5.0   −2.5   0.0   2.5   5.0

Distortion value (%)

FIG. 10

FIG. 11

Spherical aberration

FIG. 12

Field of view

43.78

32.84

21.89

10.95

-5.0  -2.5  0.0  2.5  5.0
Focal length (mm)

FIG. 13

Field of view

43.78

32.84

21.89

10.95

-5.0  -2.5  0.0  2.5  5.0
Distortion value (%)

FIG. 14

FIG. 15

FIG. 16

Field of view

43.78

32.84

21.89

10.95

-2    -1    0    1    2
Focal length (mm)

FIG. 17

Field of view

43.78

32.84

21.89

10.95

-5.0   -2.5   0.0   2.5   5.0
Distortion value (%)

FIG. 18

FIG. 19

FIG. 20

Field of view

44.00

33.00

22.00

11.00

-0.50    -0.25    0.0    0.25    0.50
Focal length (mm)

FIG. 21

Field of view

44.00

33.00

22.00

11.00

-5.0    -2.5    0.0    2.5    5.0
Distortion value (%)

FIG. 22

FIG. 23

FIG. 24

Field of view

44.00

33.00

22.00

11.00

-0.08    -0.04    0.0    0.04    0.08

Focal length (mm)

FIG. 25

Field of view

44.00

33.00

22.00

11.00

-5.0    -2.5    0.0    2.5    5.0

Distortion value (%)

FIG. 26

FIG. 27

EP 4 478 105 A1

Spherical aberration

FIG. 28

56

Field of view

44.00

33.00

22.00

11.00

-0.2    -0.1    0.0    0.1    0.2

Focal length (mm)

FIG. 29

Field of view

44.00

33.00

22.00

11.00

-5.0    -2.5    0.0    2.5    5.0

Distortion value (%)

FIG. 30

<table>
<tr><td colspan="2" align="center"><strong>INTERNATIONAL SEARCH REPORT</strong></td><td>International application No.<br><strong>PCT/CN2023/085871</strong></td></tr>
</table>

**A. CLASSIFICATION OF SUBJECT MATTER**

G02B13/00(2006.01)i;  G02B13/18(2006.01)i;  G03B30/00(2021.01)i

According to International Patent Classification (IPC) or to both national classification and IPC

**B. FIELDS SEARCHED**

Minimum documentation searched (classification system followed by classification symbols)

IPC: G02B G03B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 第七, 第八, 透镜, 镜片, 正, 负, 像高, 总长, seventh, eighth, lens, positive, negative, image, height, TTL

**C. DOCUMENTS CONSIDERED TO BE RELEVANT**

| Category* | Citation of document, with indication, where appropriate, of the relevant passages | Relevant to claim No. |
|---|---|---|
| X | CN 114047595 A (HUAWEI TECHNOLOGIES CO., LTD.) 15 February 2022 (2022-02-15) description, paragraphs [0033]-[0035] and [0357]-[0389], and figures 1, 2, and 28 | 1-15, 20, 21 |
| A | CN 111624745 A (CHANGZHOU AAC RAYTECH OPTRONICS CO., LTD.) 04 September 2020 (2020-09-04) entire document | 1-21 |
| A | CN 110161664 A (RUISHENG OPTOELECTRONICS TECHNOLOGY (SUZHOU) CO., LTD.) 23 August 2019 (2019-08-23) entire document | 1-21 |
| A | US 2016299319 A1 (ABILITY OPTO-ELECTRONICS TECHNOLOGY CO., LTD.) 13 October 2016 (2016-10-13) entire document | 1-21 |
| A | US 2021396962 A1 (AAC OPTICS SOLUTIONS PTE LTD.) 23 December 2021 (2021-12-23) entire document | 1-21 |
| A | US 2021157101 A1 (KANTATSU CO., LTD.) 27 May 2021 (2021-05-27) entire document | 1-21 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 May 2023** | **03 July 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/085871**

| Patent document cited in search report | | | Publication date (day/month/year) | Patent family member(s) | | | Publication date (day/month/year) |
|---|---|---|---|---|---|---|---|
| CN | 114047595 | A | 15 February 2022 | None | | | |
| CN | 111624745 | A | 04 September 2020 | None | | | |
| CN | 110161664 | A | 23 August 2019 | None | | | |
| US | 2016299319 | A1 | 13 October 2016 | US | 9678309 | B2 | 13 June 2017 |
| US | 2021396962 | A1 | 23 December 2021 | None | | | |
| US | 2021157101 | A1 | 27 May 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210367876